# EUROPEAN PATENT APPLICATION

(11) **EP 4 529 319 A1**
(43) Date of publication of application: **26.03.2025**
(21) Application number: 23819150.6
(22) Date of filing: 07.06.2023
(51) Int. Cl.: H04W 72/04

(54) **INFORMATION TRANSMISSION METHOD, COMMUNICATION NODE, AND STORAGE MEDIUM**

(30) Priority: 08.06.2022 CN 202210647872
(71) Applicant: ZTE Corporation, Shenzhen, Guangdong 518057 (CN)
(72) Inventor: YUAN, Zhifeng, Shenzhen, Guangdong 518057 (CN); MA, Yihua, Shenzhen, Guangdong 518057 (CN); XIA, Shuqiang, Shenzhen, Guangdong 518057 (CN); YU, Guanghui, Shenzhen, Guangdong 518057 (CN); HU, Liujun, Shenzhen, Guangdong 518057 (CN)
(74) Representative: Aipex B.V.
(86) International application number: PCT/CN2023/098836
(87) International publication number: WO 2023/236985

(57) **Abstract**

Provided are an information transmission method, a communication node, and a storage medium. The method includes the following: acquiring location information of a first communication node is acquired; and in a non-connected state, transmitting a data packet including the location information to a second communication node.

## Description

### TECHNICAL FIELD

The present application relates to the field of communication technology, for example, an information transmission method, a communication node, and a storage medium.

### BACKGROUND

Integration of sensing and communication (ISAC) refers to the integration of two functions of communication and sensing so that future communication systems have such two functions. Future wireless communication systems will have needs for ISAC.

On the other hand, an important scenario in future wireless communication systems is Internet of things (IoT) or Massive Machine-Type Communications (mMTC). In the IoT or mMTC communication scenario, an important type of service needs to acquire location information of User Equipment (UE).

To meet the needs of ISAC and IoT/mMTC, a large amount of location information of the UE needs to be acquired. If the UE sends location information, the power consumption of the UE will increase. Therefore, how to reduce the to-be-increased power consumption of the UE while meeting the needs of ISAC and IoT/mMTC is a technical problem that needs to be solved urgently.

### SUMMARY

The present application provides an information transmission method, a communication node, and a storage medium.

Embodiments of the present application provide an information transmission method. The method is applied to a first communication node and includes the following.

Location information of the first communication node is acquired.

In a non-connected state, a data packet including the location information is transmitted to a second communication node.

Embodiments of the present application also provide an information transmission method. The method is applied to a second communication node and includes the following.

A transmission resource is determined.

Through a target signaling, the location of the transmission resource is indicated to a first communication node, where the transmission resource is used by the first communication node in a non-connected state to transmit a data packet including location information.

An embodiment of the present application also provides a communication node.

The communication node includes one or more processors and a storage apparatus configured to store one or more programs.

When executed by the one or more processors, the one or more programs cause the one or more processors to perform the preceding information transmission method.

An embodiment of the present application also provides a computer-readable storage medium. The computer-readable storage medium stores a computer program that, when executed by a processor, causes the processor to perform the preceding information transmission method.

The preceding embodiments and other aspects of the present application and implementations thereof are described in more detail in the brief description of drawings, detailed embodiments, and claims.

### BRIEF DESCRIPTION OF DRAWINGS

FIG. 1A is a diagram illustrating the implementation of acquiring location information of a terminal according to an embodiment.
FIG. 1B is a diagram illustrating the implementation of monitoring condition information of weather according to an embodiment.
FIG. 1C is a diagram illustrating the implementation of monitoring dust information according to an embodiment.
FIG. 2 is a flowchart of an information transmission method according to an embodiment.
FIG. 3 is a flowchart of another information transmission method according to an embodiment.
FIG. 4 is a diagram illustrating the implementation of transmitting a data packet based on a pilot scheme according to an embodiment.
FIG. 5A is a diagram illustrating the implementation of a pilot scheme according to an embodiment.
FIG. 5B is a diagram illustrating the implementation of another pilot scheme according to an embodiment.
FIG. 6A is a diagram illustrating the implementation of transmitting a data packet based on pilots according to an embodiment.
FIG. 6B is another diagram illustrating the implementation of transmitting a data packet based on pilots according to an embodiment.
FIG. 7 is a diagram illustrating the implementation of yet another pilot scheme according to an embodiment.
FIG. 8 is a diagram illustrating the implementation of yet another pilot scheme according to an embodiment.
FIG. 9A is a diagram illustrating the implementation of yet another pilot scheme according to an embodiment.
FIG. 9B is a diagram illustrating the implementation of yet another pilot scheme according to an embodiment.
FIG. 10A is a diagram illustrating the implementation of defining a physical resource block according to an embodiment.
FIG. 10B is a diagram illustrating the implementation of defining demodulation reference signals according to an embodiment.
FIG. 10C is another diagram illustrating the implementation of defining demodulation reference signals according to an embodiment.
FIG. 11A is a diagram illustrating the implementation of defining demodulation reference signals using an OCC according to an embodiment.
FIG. 11B is another diagram illustrating the implementation of defining demodulation reference signals using an OCC according to an embodiment.
FIG. 11C is yet another diagram illustrating the implementation of defining demodulation reference signals using an OCC according to an embodiment.
FIG. 12A is a diagram illustrating the implementation of transmission based on a PRB according to an embodiment.
FIG. 12B is yet another diagram illustrating the implementation of defining demodulation reference signals according to an embodiment.
FIG. 12C is yet another diagram illustrating the implementation of defining demodulation reference signals according to an embodiment.
FIG. 12D is yet another diagram illustrating the implementation of defining demodulation reference signals according to an embodiment.
FIG. 13A is a diagram of a BPSK symbol according to an embodiment.
FIG. 13B is another diagram of a BPSK symbol according to an embodiment.
FIG. 13C is yet another diagram of a BPSK symbol according to an embodiment.
FIG. 14A is a diagram illustrating the implementation of defining a reference signal according to an embodiment.
FIG. 14B is another diagram illustrating the implementation of defining a reference signal according to an embodiment.
FIG. 15A is yet another diagram illustrating the implementation of defining a reference signal according to an embodiment.
FIG. 15B is a diagram illustrating the implementation of generating DMRS ports according to an embodiment.
FIG. 16A is yet another diagram illustrating the implementation of defining a reference signal according to an embodiment.
FIG. 16B is yet another diagram illustrating the implementation of defining a reference signal according to an embodiment.
FIG. 17 is a diagram illustrating the implementation of an information transmission method according to an embodiment.
FIG. 18 is a diagram illustrating the structure of an information transmission apparatus according to an embodiment.
FIG. 19 is a diagram illustrating the structure of an information transmission apparatus according to an embodiment.
FIG. 20 is a diagram illustrating the structure of hardware of a communication node according to an embodiment.

### DETAILED DESCRIPTION

Procedures illustrated in flowcharts among the drawings may be executed by, for example, a computer system capable of executing a set of computer-executable instructions. Moreover, although logical sequences are illustrated in the flowcharts, the procedures illustrated or described may be performed in sequences different from those described herein in some cases.

In the embodiments, future wireless communication systems may include the following three requirements.

### 1. Requirements for integration of sensing and communication

Examples are as follows:
High-precision three-dimensional environmental maps are established by communication signals.

Rainfall, dust, concentration of chemical gas, and other aspects are detected by communication signals.

Road conditions are detected by communication signals.

Security functions are achieved by communication signals.

### 2. Requirements for improving the performance of communications systems

For example, systems achieve easier and more accurate multi-user pairing and scheduling, beamforming, energy saving of base stations, and other purposes.

### 3. Requirements for better support for IoT/mMTC

Future wireless communication systems will have needs for ISAC. If systems can acquire the location information of a large number of terminals (that is, UE) and meanwhile know the channel information experienced by the wireless signals that are transmitted by these terminals (that is, the systems know the channels the electromagnetic waves transmitted from these locations travel through to reach a base station), then these pieces of information (that is, the preceding location information and channel information) can be used to do many things. Examples are as follows.

Environment maps are established.

Real-time monitoring of rainfall, snow, and other weather conditions, especially heavy rain and snow is achieved. Moreover, real-time monitoring of sand, dust, and chemical gas is implemented.

Monitoring of pedestrians, vehicle traffic, and other aspects is achieved to assist transportation and can also be used as information to assist public governance.

Perceiving the number of terminals in a place is achieved, and then security functions are implemented by communication signals.

Functions such as energy saving and load balancing are achieved.

Future wireless communication systems also have the requirement to better support IoT/mMTC. If the systems can acquire the location information of a large number of terminals, the systems can provide better IoT services, such as asset tracking, logistics management, and child/elderly/pet anti-lost services.

It should be noted that before the technical solutions disclosed in each embodiment of the present application are used, a user should be notified, in an appropriate manner in accordance with relevant laws and regulations, of the type of personal information, the usage range, the usage scenario, and other aspects involved in the present application, and the data cannot be used before the user's authorization is acquired. That is, operations such as acquisition, storage, use, and processing of data in the technical solutions of the present application comply with the relevant provisions of national laws and regulations. For example, operations such as acquisition, storage, use, and processing of location information of a terminal in the present application comply with the relevant provisions of national laws and regulations.

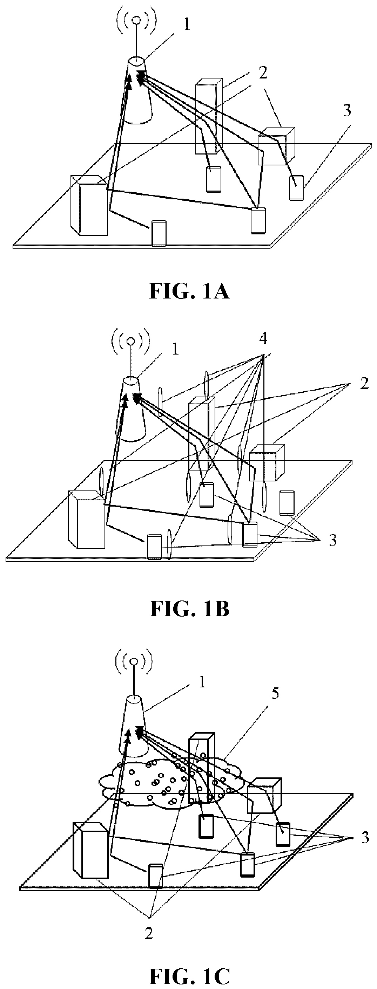

FIG. 1A is a diagram illustrating the implementation of acquiring location information of a terminal according to an embodiment. As shown in FIG. 1A, 1 represents a base station, 2 represents a building, and 3 represents a terminal. The base station 1 can acquire a large quantity of location information of the terminal 3 at different locations (such as location 1, location 2, ... location K) and can also acquire channel information (such as channel 1, channel 2, ... channel K) experienced by wireless signals transmitted by the terminals 3.

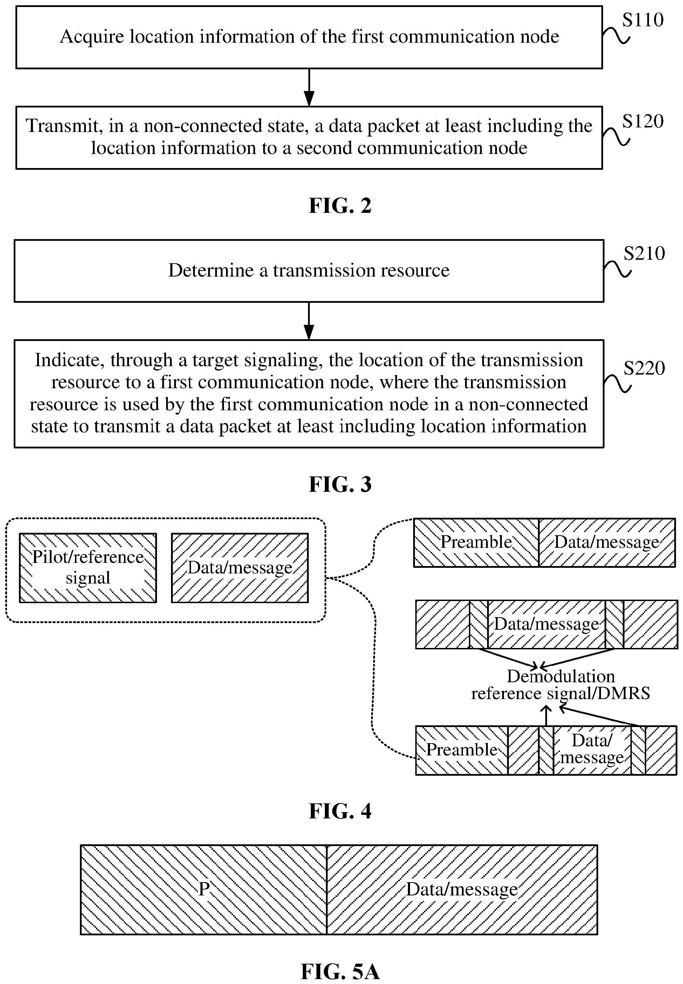

FIG. 1B is a diagram illustrating the implementation of monitoring condition information of weather according to an embodiment. As shown in FIG. 1B, 4 represents rain and snow. The corresponding weather conditions of rain and snow can be sensed by the location information of terminal 3.

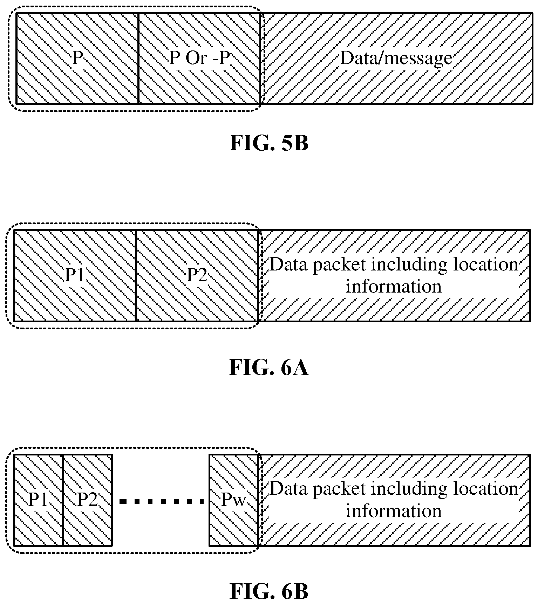

FIG. 1C is a diagram illustrating the implementation of monitoring dust information according to an embodiment. As shown in FIG. 1C, 5 represents dust. The corresponding condition of dust can be sensed by the location information of terminal 3.

However, the transmission of the location information of a terminal increases power consumption of the terminal. Therefore, most private users' terminals may resist the requirement of "transmitting your own location information". For example, if the function of "transmitting your own location information" is optional, many users may turn off this function. Alternatively, some terminals may use transmitting no location information as a point of attracting users. These conflicts greatly reduce the number of terminals that can provide location information and ultimately reduce the performance of related solutions that rely on "location information and corresponding wireless channel information thereof (wireless channel information is the channel information experienced by the wireless signal transmitted by a terminal)".

In the embodiments, related uplink information transmission or uplink data transmission first requires a terminal (that is, UE) to be in a connected state. The connected state may also be referred to as a radio resource control (RRC) connected state. However, a terminal in the connected state generally does not have a dedicated uplink transmission resource. Therefore, the terminal in the connected state needs to apply for an uplink transmission resource from a base station each time before transmitting data. After acquiring the grant of an uplink resource from the base station, the terminal can transmit data on a time-frequency resource designated by the base station. It can be seen that in order for the terminal to complete an uplink data transmission, many operations need to be completed in advance. If the terminal is required to transmit location information by a related uplink data transmission mechanism, power consumption of transmitting location information by the terminal is significantly increased, and signaling overheads of the system are also increased. More specific analysis is as follows.

First, to save power, a terminal transmits location information at a very low frequency. Usually, location information is transmitted once every few seconds, tens of seconds, or even minutes. In this case, when the location information does not need to be transmitted and no other services are available, the terminal is generally in an idle state or an inactive state of deep sleep to save power. In other words, to save power, the terminal usually does not enter the connected state (that is, the terminal is not in the connected state). The terminal needs to perform some operations when accessing a connected state or maintaining a connected state, which increases the power consumption of the terminal, while these operations are not required when the terminal is in an unconnected state, that is, the idle state or the inactive state, which saves power.

That is, when the terminal does not need to transmit location information or has no other service, the terminal usually has no connection with the system (that is, disconnected), that is, the terminal is in an unconnected state (Non-connected state, non RRC connected state, connectionless state, connection-free state, or disconnected state can all represent unconnected state). In this case, no context of the terminal exists in the system. In the embodiments, the idle state or inactive state may be considered to be equivalent to an unconnected state or may be considered as an unconnected state.

When the terminal is originally in an unconnected state (that is, the terminal has not entered the connected state or has not established a connection with the system), if the relevant uplink data transmission scheme is used, the terminal must establish a connection with the system before transmission to transmit the location information. After entering the connected state (also referred to as an active state), the terminal can then further apply for an uplink transmission resource from the system (such as a base station or an access point). Only after acquiring resource grant or resource scheduling of the system can the actual location information be transmitted. A random access process is required for the terminal to enter the connected state from the unconnected state. This random access process requires multiple interactions between the terminal and the base station. The terminal sends a preamble, the base station makes a random access response (RAR), the terminal sends layer2 (L2) or layer3 (L3) control information, and the base station sends a message 4. This process undoubtedly greatly increases the power consumption of the terminal each time the location information is transmitted.

Further, if the preceding related uplink data transmission scheme is used, and if a large number of terminals that need to transmit location information are required and a large number of terminals need to enter the connected state before transmitting location information, a large number of terminals will have a random access process and then apply for the grunt of uplink resources. A large number of terminals indicate that random access processes will have a high probability of collision or blocking. As a result, many terminals need multiple access attempts to succeed. The final result is that the energy and signaling consumed by the terminals to complete the task of transmitting location information further significantly increases. It can be seen that the preceding related uplink data transmission scheme is not suitable for the application scenario where a large number of terminals transmit location information.

In the embodiments, another mode of related uplink data transmission may be semi-persistent scheduling (SPS). SPS aims to reduce the physical control signaling overheads and latency of small data packet services and is very suitable for periodic services, such as voice over IP (VoIP). The data rate of VoIP is basically constant during a talkspurt, and a voice packet is generated every 20 ms. Each talkspurt lasts an average of 1-2 seconds, including 50-100 voice packets. The small-scale fading during this period is compensated by closed-loop power control to ensure that the signal-to-noise ratio (SNR) of a signal on the receiving side is basically constant. Therefore, the modulation and coding scheme (MCS) during this period may remain unchanged, and the allocated physical resource either remains unchanged or jumps according to a fixed rule. Therefore, dynamic signaling is not required. SPS may be considered as an enhanced form of semi-static configuration, mainly used for periodic small-packet services with constant packet size. SPS generally works in the connected state (RRC Connected), that is, the terminal has completed the initial access process. Although the frequency of scheduling is far lower than the frequency at which a data packet arrives, the scheduling is basically non-competitive, and different users do not have resource collisions, such as reference signal/pilot collisions. In the 5th generation mobile communication technology (5G) system, the evolved SPS may be used in an ultra-reliable and low latency communications (URLLC) scenario, which ensures high reliability on the one hand and reduces the latency on the user plane on the other hand. In this case, SPS may also be referred to as configured grant, that is, pre-configured resource grant. Configured grant is also considered a special grant-free mode or scheduling-free mode because configured grant can avoid the "dynamic grant application" or "dynamic scheduling application" for each data transmission. Essentially, configured grant is "dynamic grant-free" or "dynamic scheduling-free". It should be pointed out that in this SPS-style "dynamic scheduling-free", the transmission resources of different users are essentially pre-configured by a base station instead of being acquired by users through "competition", so this SPS-style "dynamic scheduling-free" can be considered to be "non-competitive". The most important point is as follows: For this type of non-competitive scheduling-free mode, reference signals are usually pre-configured by the base station to avoid "collision". For example, the pre-configuration of the base station may be used to ensure that the reference signals of users transmitted on the same time-frequency resources are orthogonal.

Although the pre-configured scheduling-free mode such as SPS or configured grant can reduce the overheads of physical control signaling for uplink transmission, the spectral efficiency of the system is still very low if SPS is still used to report location information of a large number of users. The reason is as follows: If a terminal applies for a periodic transmission resource in a cell for a period of time, but the terminal performs handoff during this process, the terminal needs to apply for a new pre-configured transmission resource from the cell entered by the terminal and meanwhile notify the cell the terminal leaves to release the pre-configured resource previously allocated to the terminal. It is a complicated process for the terminal to reapply for a transmission resource from the newly entered cell. A random access process is also required in the newly entered multiple cells, which significantly increases power consumption of the terminal and signaling overheads of the system. In the scenario of transmitting location information, the terminal does not transmit the location information too frequently to save power, that is, the terminal sends the location information once after a relatively long interval. Therefore, to improve efficiency, the interval between pre-configured resources is usually relatively long, indicating that adverse effects caused by handoff are significantly increased. In this manner, spectral efficiency of the system is significantly reduced, and system complexity is increased. Even if different terminals or nodes are fixed, the environment around the terminals or nodes is very likely to change over a long period of time, leading to handoff, especially for terminals or nodes at the edge of a cell.

On the basis of the preceding embodiments, it can be learned that although the SPS pre-configuration mechanism can implement scheduling-free transmission or grant-free transmission, the SPS pre-configuration mechanism is not suitable for the application scenario where a large number of terminals transmit location information.

Therefore, the present application proposes an information transmission method. In this method, a specific signal (that is, a data packet at least including location information in a non-connected state) can be generated and transmitted by a terminal to meet the needs of the preceding ISAC and IoT/mMTC. Meanwhile, power consumption of the terminal can be reduced, the problem of power consumption caused by the terminal transmitting location information is greatly alleviated, and the user's concerns about the power consumption caused by transmitting location information are reduced. Ultimately, the function of "transmitting your own location information" can be made a mandatory function of the terminal or can be made an obligatory or mandatory function of the terminal. That is, each terminal needs to have this function to pass the authentication when authenticated for network access, and this function cannot be turned off to prevent the terminal from turning off this function after passing the authentication. In this manner, the number of terminals that can provide location information can be greatly increased, thereby improving performance of various solutions based on "location information" or "location information and wireless channel information corresponding to the location information".

To resolve the preceding technical problems, FIG. 2 is a flowchart of an information transmission method according to an embodiment. As shown in FIG. 2, the method provided in this embodiment may be applied to a first communication node (that is, UE) and includes S110 and S120.

In S110, location information of the first communication node is acquired.

In this embodiment, the first communication node may be considered as a terminal device (that is, UE). The location information may be understood as information representing the current location (such as a geographical location) of the first communication node. The first communication node may acquire its current location information. No limitation is imposed herein on how to acquire the location information of the first communication node. For example, the first communication node may acquire and position the current location information of the first communication node by a positioning module set up by the first communication node. Alternatively, the first communication node may receive the location information from another place. For example, a base station transmits the calculated location information of the first communication node to the first communication node, and the first communication node receives the location information.

In S120, in a non-connected state, a data packet at least including the location information is transmitted to a second communication node.

In this embodiment, the non-connected state may be considered as the unconnected state mentioned above, and the non-connected state may also be referred to as an idle state or an inactive state. The data packet may be understood as a data unit used for transmitting data in a communication process. The data packet includes data to be transmitted.

In an embodiment, the data packet including location information may also include identity-related information corresponding to the first communication node or may not include identity-related information corresponding to the first communication node. The identity-related information may be understood as information that represents the identity of the first communication node. The identity-related information may uniquely identify the first communication node and may be considered as a label of the first communication node. It should be noted that operations such as acquisition, storage, use, and processing of identity-related information in the present application comply with the relevant provisions of national laws and regulations.

To save power consumption of the terminal (that is, the first communication node), the first communication node may transmit, in a non-connected state, the data packet at least including location information to the second communication node. No specific limitation is imposed herein on how to transmit the data packet at least including location information to the second communication node. For example, the signaling indicating the location of the transmission resource and transmitted by the second communication node may be received to transmit the data packet based on a time-frequency resource in the indicated transmission resource.

In the non-connected state, the location information of the first communication node is transmitted. The first communication node does not need to establish a connection with the second communication node in advance, nor does the first communication node need to request the second communication node to allocate a dedicated resource for uplink transmission of data to the first communication node, thereby avoiding the power consumption of the first communication node in establishing a connection. Moreover, after the location information is transmitted, since the information is transmitted in the non-connected state, the first communication node does not need to release the corresponding connection at this time, which further avoids the increase in power consumption. Therefore, in this embodiment, the acquired location information of the first communication node is transmitted to the corresponding second communication node in the non-connected state so that the increase in power consumption caused by repeated interaction in establishing a connection with the second communication node can be avoided.

In an embodiment, the method also includes the following.

A target signaling is acquired.

Based on the target signaling, a transmission resource configured or defined by the second communication node is determined, where the transmission resource is used by the first communication node in a non-connected state to transmit the data packet at least including location information.

In this embodiment, the target signaling may be understood as a signaling that is used to configure or define the location of a transmission resource. The transmission resource may be understood as a common time-frequency resource used by the first communication node in a non-connected state to transmit the data packet at least including location information, that is, the transmission resource may include multiple time-frequency resources.

The transmission resource may be a common resource defined or configured by the second communication node. The target signaling may be a broadcast signaling defined by the second communication node to indicate the location of the transmission resource. Based on this, the first communication node may acquire a target signaling transmitted by the second communication node, and determine, based on the target signaling, a transmission resource configured or defined by the second communication node.

In an embodiment, transmitting the data packet at least including the location information to the second communication node includes the following.

A time-frequency resource is selected in the transmission resource.

The data packet at least including the location information is transmitted to the second communication node on the time-frequency resource.

In this embodiment, the first communication node selects a time-frequency resource in the transmission resource to transmit, on the time-frequency resource, the data packet at least including the location information to the corresponding second communication node. No limitation is imposed herein on how the first communication node selects a time-frequency resource in the transmission resource. For example, the first communication node may designate, as required, a time-frequency resource in the transmission resource for transmitting the location information.

In an embodiment, transmitting the data packet at least including the location information to the second communication node includes the following.

W pilots are determined.

The data packet at least including the location information and the W pilots are transmitted to the second communication node together; where W is greater than 1.

In this embodiment, wireless communications generally need to insert a pilot into a transmitted signal or transmitted data packet so that the receiver (that is, the second communication node) first estimates, by the pilot, a channel and a time frequency offset experienced by the transmitted signal or the transmitted data packet, thereby implementing the demodulation of data symbols in the data packet. The pilot included in the transmitted signal or transmitted data packet may also be referred to as a pilot signal, a reference signal (RS), or a demodulation reference signal (DMRS). In terms of form, the pilot is usually a sequence or a string of symbols, so the pilot may also be referred to as a pilot sequence.

In the process of transmitting the data packet at least including the location information to the second communication node, the first communication node may first determine W pilots (W is greater than 1, which means that at least two pilots are determined first). Based on this, the data packet at least including the location information and the W pilots may be transmitted to the corresponding second communication node together. The pilots are not specifically limited herein. For example, the pilots may be extremely sparse pilots or independent multi-pilots. When the data packet and W pilots are transmitted, the position of the pilots may be contained in the data packet (such as in the middle of the data packet) or outside the data packet (such as in front of or behind the data packet), which is not limited herein.

In this embodiment, no specific limitation is imposed on how to determine W pilots. For example, the first communication node may autonomously select a pilot or autonomously generate a pilot.

Illustratively, in a non-connected state, the first communication node (for example, the terminal) transmits the data packet at least including the location information of the first communication node to the second communication node. In this case, since the first communication node does not enter a connected state during transmission, the first communication node cannot acquire the pilots specified by the second communication node (such as a base station or an access point), so the pilots used when the first communication node transmits the data packet may be selected or generated by the first communication node autonomously. Selecting pilots may indicate that the first communication node selects the pilots from a preset pilot set. Generating pilots may indicate that the first communication node generates the pilots according to a preset rule or formula. In fact, all the pilots generated according to the preset rule or formula herein also constitute a preset pilot set, so it can be understood that generating pilots according to a preset rule or formula is equivalent to selecting pilots in a preset pilot set, and the two may be understood as the same thing. In subsequent embodiments, the selection of pilots in a preset pilot set is used as an example for explanation. It can be learned that the autonomous pilot selection may indicate that the terminal (that is, the first communication node) may decide how to select pilots from a preset pilot set without the need for signaling instructions or arrangements from the second communication node (that is, the base station or access point) to determine the pilots to be transmitted in a non-connected state. Otherwise, if pilots required for transmission by the terminal need to be indicated or arranged by a base station (that is, the second communication node), the terminal, before transmission, needs to first acquire a signaling that is delivered by the base station and used to indicate the pilots. In this case, the transmission of the data packet requires the terminal to acquire a connection with the base station first, so a series of processes are required to establish the connection, which also leads to all the problems of transmission under the connection. Therefore, the terminal transmits, in a non-connected state, the data packet at least including the location information of the terminal to the base station or the access point, and the pilots included in the transmission may be selected autonomously by the terminal, that is, the pilots included in the transmission are determined autonomously by the terminal.

In an embodiment, the W pilots are independent and unrelated.

In this embodiment, the determined W pilots are independent and unrelated. That is, it may be understood that no correlation exists between the W pilots or the W pilots are unrelated to each other. The determined W pilots are independent and unrelated, indicating that even after the base station knows one of the pilots, the base station cannot infer other (W-1) pilots from the pilot.

In an embodiment, the W pilots are determined according to information in the transmitted data packet.

In this embodiment, the W pilots may be determined according to information in the data packet transmitted together. No specific limitation is imposed herein on how to determine W pilots using the information in the transmitted data packet. For example, in addition to location information, the information in the transmitted data packet may also include information for determining W pilots, for example, information such as index numbers of the W pilots in a pilot set, the initial state of generated pilots, or information in the transmitted data packet reused to indicate the index numbers of the W pilots in a pilot set or the initial state of generated pilots. The corresponding W pilots may be determined according to information such as index numbers of the W pilots in a pilot set or the initial state of generated pilots. The related information for determining the W pilots is included in the transmitted data packet to determine the W pilots by the related information included in the data packet. Therefore, an additional piece of information used to indicate the W pilots does not need to be added in the transmission process. The related information may be the original information in the data packet, and the original information is reused to indicate the index numbers of the W pilots, the initial state of generated pilots, or other pieces of information identifying the pilots. In this manner, once the data packet of a terminal is successfully decoded, the information of all the pilots used by the terminal in this transmission can be known, and then all the pilots can be reconstructed. Thus, the interference of the pilot signals can be eliminated.

In an embodiment, the W pilots are determined according to one or more bits in the transmitted data packet.

In this embodiment, one or more bits are required to determine each pilot, and these bits may be the original bits in the transmitted data packet, that is, the original bits in the transmitted data packet are reused to indicate the index numbers of the W pilots, the initial state of generated pilots, or other pieces of information identifying the pilots. For example, bits representing location information may be used to indicate the index numbers of the W pilots, the initial state of generated pilots, or other pieces of information identifying the pilots. Based on this, the W pilots may be determined according to one or more bits in the transmitted data packet. It can be understood that each pilot may be determined according to one or more bits. No specific limitation is imposed herein on how to determine W pilots by one or more bits in the transmitted data packet. For example, one or more bits corresponding to each pilot may be used as an index to select a corresponding pilot from a pilot set.

It can be understood that since W pilots are independent and unrelated, bits required by each pilot are also independent and unrelated. That is, if bits in the transmitted data packet are originally independent and unrelated, different pilots can be determined according to different bits in the transmitted data packet so that the generated W pilots are independent and unrelated.

In an embodiment, each pilot is from a pilot set including M pilots, and each pilot is determined from the pilot set according to log₂(M) bits in the transmitted data packet.

In this embodiment, the log function, a function with power (antilogarithm) as an independent variable, exponent as a dependent variable, and base as a constant, is also known as a logarithmic function. Log₂(M) may be understood as the logarithm of M with base 2. For example, if M is 8, log₂(M) is 3, and if M is 64, log₂(M) is 6. Each pilot is from a pilot set including M pilots. The specific value of M is not limited herein but may be set as required. Each pilot may be determined from a corresponding pilot set according to log₂(M) bits in the transmitted data packet.

In an embodiment, at least two pilots of the W pilots are from different pilot sets.

For example, in one case, a transmission includes a preamble and a demodulation reference signal (DMRS), and the two pilots are independent of each other; the preamble in the transmission comes from a preamble sequence set, and the demodulation reference signal comes from a DMRS set.

In an embodiment, at least two pilots of the W pilots have different lengths.

In an embodiment, only U symbols in each pilot of the W pilots are non-zero values, where U is greater than 0 and less than 5.

In this embodiment, a symbol being a non-zero may be understood as a non-zero symbol, and the non-zero symbol may also be referred to as a non-zero signal, a useful signal, or another signal. U symbols in each of the W pilots are non-zero values, where U is greater than 0 and less than 5. Pilots in this embodiment may be considered as extremely sparse pilots. Extremely sparse pilots may be considered as sparse pilots that are sparser than traditional sparse pilots. Because a traditional sparse pilot still needs to have reference signals in the entire transmission bandwidth and time, that is, reference signals need to cover the entire transmission bandwidth and time. In this manner, the reference signals can be used to estimate the wireless multi-path channel (that is, the frequency-selective channel) in the entire transmission bandwidth and the timing offset and frequency offset in the transmission time, but the interval of the reference signals of the sparse pilot is larger, that is, the signals are sparse. It can be seen that the task or responsibility of the traditional sparse pilot is actually the same as that of a non-sparse pilot. That is, the reference signals are needed to estimate the frequency-selective channel, timing offset, and frequency offset of the entire transmission channel. Therefore, although the reference signals may be sparse, the reference signals still need a certain density, that is, the reference signals need to cover the entire transmission bandwidth and time. In contrast, extremely sparse pilots may indicate that each pilot in a pilot set is the sparsest in the entire transmission bandwidth and time. This is because the task of an extremely sparse pilot in channel estimation is to estimate only one channel value, and therefore, one extremely sparse pilot may have only one adjacent symbol in the time domain and the frequency domain. For example, an extremely sparse pilot may have only one non-zero element (that is, a non-zero symbol); an extremely sparse pilot may have only one adjacent pair of non-zero elements, that is, 2 adjacent non-zero elements; or an extremely sparse pilot may have only one group of 4 adjacent non-zero elements.

In an embodiment, the value of W is 2.

In this embodiment, two pilots may be determined. The data packet at least including the location information and 2 pilots are transmitted to the second communication node together.

In an embodiment, transmitting the data packet at least including the location information to the second communication node includes the following.

A pilot is determined, where only U symbols in the pilot are non-zero values, and U is greater than 0 and less than 5.

The data packet at least including the location information and 1 pilot are transmitted to the second communication node together.

In this embodiment, the pilot may be considered to be an extremely sparse pilot.

In the process of transmitting the data packet at least including location information to the second communication node, the first communication node may first determine a pilot, U symbols in the pilot are non-zero values, and U is greater than 0 and less than 5. No limitation is imposed herein on how to determine a pilot. For example, the pilot may be autonomously selected or generated. On this basis, the data packet at least including location information and the one pilot may be transmitted together to the corresponding second communication node.

In an embodiment, the time interval for transmitting the data packet is at least greater than a set threshold.

In this embodiment, the time interval for transmitting the data packet may be understood as the frequency for transmitting the data packet. The set threshold may be understood as a preset time interval threshold. The specific value of the set threshold is not limited herein. For example, the set threshold may be tens of seconds, minutes, or an hour.

To save power consumption of the first communication node, the transmission frequency of the data packet may not be made excessively frequent. Therefore, the time interval for transmitting the data packet may be configured to be at least greater than a set threshold.

In an embodiment, the set threshold is in seconds or minutes.

In an embodiment, transmitting the data packet at least including the location information to the second communication node includes the following.

The data packet at least including location information is coded and modulated to form a modulation symbol; through a spreading sequence, the modulation symbol is spread to obtain spread symbols.

The spread symbols are transmitted to the second communication node.

In this embodiment, since a base station (that is, the second communication node) may receive, on the same time-frequency resource, data packets that at least include location information and are sent by a large number of different terminals (that is, the first communication nodes), transmission of these large number of data packets is competitive, which may cause resource collisions. To resolve the preceding problem, modulation performance of the data packets may be optimized. For example, each data packet at least including location information may be first coded and modulated to form a corresponding modulation symbol. Then, each modulation symbol is spread to obtain spread symbols through a spreading sequence. For example, each modulation symbol may be spread to a symbol of length L through a spreading sequence of length L. No specific limitation is imposed herein on how to perform extension. For example, it is assumed that the n-th modulation symbol before extension is sₙ, and the spreading sequence of L length is that [c₁, c₂, ... c_{L}]. Spreading sₙ may be multiplying sₙ with each element of the spreading sequence to obtain L symbols after expansion, that is, [sₙ*c₁, sₙ*c₂, ... sₙ*c_{L}]. Finally, the spread symbols may be transmitted to the corresponding second communication node.

In an embodiment, the spreading sequence is determined according to information in the transmitted data packet.

In this embodiment, the spreading sequence may be determined according to information in the data packet transmitted together. No specific limitation is imposed herein on how to determine the spreading sequence through the information in the transmitted data packet. For example, in addition to location information, the information in the transmitted data packet may also include information such as a spreading sequence or related information used for indicating the spreading sequence. For another example, information in the transmitted data packet is reused to indicate information such as a spreading sequence or related information used for indicating the spreading sequence. In this manner, related information used for indicating the spreading sequence may not need to be added additionally. The corresponding spreading sequence may be determined based on information such as a spreading sequence or related information used for indicating the spreading sequence.

The content included in the data packet at least including location information according to the present application is not specifically limited, as long as location information can be included. In the present application, the determination of the pilot and the spreading sequence may be indicated by the information in the data packet. That is, the information in the data packet is used to determine the pilot and the spreading sequence in addition to representing the original meaning.

The number of bits included in the information for determining the pilot and the spreading sequence in the data packet may be the same or different. The position of the information for determining the pilot and the spreading sequence may be the same or different in the data packet.

In an embodiment, the spreading sequence is from a set including V spreading sequences, and the spreading sequence is determined from the set including V spreading sequences by log2 (V) bits in the transmitted data packet.

In this embodiment, log₂ (V) may be understood as a logarithm of V with base 2. For example, if V is 8, log₂ (V) is 3. The spreading sequence comes from a set including V spreading sequences. The specific value of V is not limited herein and may be set as required. The spreading sequence may be determined from a corresponding set of spreading sequences by log₂ (V) bits in the transmitted data packet. No specific limitation is imposed herein on how to determine the spreading sequence from a set of the spreading sequences by log₂ (V) bits in the transmitted data packet.

In an embodiment, the location information includes one or more of the following: location information of a global positioning system; location information of the BeiDou positioning system; location information of a cellular positioning system; location information of a positioning system based on a positioning tag; location information based on a wireless router positioning system; location information based on a Bluetooth positioning system; or location information based on an ultra-wideband positioning system.

The location information of the global positioning system may be understood as the location information of the first communication node determined by the global positioning system. The location information of the BeiDou positioning system may be understood as the location information of the first communication node determined by the BeiDou positioning system. The location information of the cellular positioning system may be understood as location information of the first communication node determined by the cellular positioning system. The cellular positioning system may be a positioning system using cellular network technology.

The location information of a positioning system based on a positioning tag may be understood as the location information of the first communication node determined by a positioning system based on a positioning tag. The positioning tag, for example, a positioning tag based on the radio-frequency identification (RFID) technology or a positioning tag based on the backscatter technology, may be understood as a preset tag for assisting in the positioning of the first communication node. For example, information such as the communication time or the distance between the first communication node and the positioning tag may be used to determine the location information of the first communication node.

The location information based on the wireless router positioning system may be understood as the location information of the first communication node determined according to the relevant information of a wireless router. Because the location system of the Wi-Fi router can be learned, the location information of the terminal can be inferred once the information of the Wi-Fi router seen and reported by the terminal is received.

The location information based on the Bluetooth positioning system may be understood as the location information of the first communication node determined by a Bluetooth access point.

The location information based on the ultra-wideband positioning system may be understood as the location information of the first communication node determined by an access point of the ultra-wideband technology.

In an embodiment, the data packet including location information includes information related to the identity of the first communication node.

Such a solution may be applied to Internet of things applications based on location information, such as asset tracking, logistics management, and loss prevention for the elderly, children, and pets. In these application scenarios, the acquisition and use of location information generally require prior permission from users.

In an embodiment, the data packet including location information does not include information related to the identity of the first communication node. Such a solution may be applied to environment sensing applications based on location information. These applications only need to know the channels that electromagnetic wave signals transmitted by certain locations pass through when reaching a base station and do not need to know who transmits the electromagnetic wave signals. The data packet including the location information does not include information related to the identity of the first communication node. An important advantage follows, that is, privacy or ethical issues can be avoided. In contrast, if the data packet including location information also includes information related to the identity of the first communication node, a series of privacy or ethical problems issues arise. Most private user terminals may resist the requirement of "transmitting your own location information" because they do not want others to know the information of "where you are". For example, if the function of "transmitting your own location information" is optional, many users may turn off this function. Alternatively, some terminals may use transmitting no location information as a point of attracting users. These conflicts greatly reduce the number of terminals that can provide location information and ultimately reduce the performance of related solutions that rely on "location and corresponding wireless channel information".

Therefore, this embodiment can avoid privacy or ethical issues caused by the terminal transmitting location information and reduce users' concerns. Therefore, the number of terminals that can provide location information can be greatly increased, thereby improving the performance of various solutions based on "location and corresponding wireless channel information".

FIG. 3 is a flowchart of another information transmission method according to an embodiment. As shown in FIG. 3, the method provided in this embodiment may be applied to a second communication node (such as a base station) and includes S210 and S220. It should be noted that for technical details not described in detail in this embodiment, reference may be made to any one of the preceding embodiments.

In S210, a transmission resource is determined.

In S220, through a target signaling, the location of the transmission resource is indicated to a first communication node, where the transmission resource is used by the first communication node in a non-connected state to transmit a data packet at least including location information.

In this embodiment, the transmission resource may be understood as a common time-frequency resource used by the first communication node in a non-connected state to transmit the data packet at least including location information. No specific limitation is imposed herein on how to determine a transmission resource. For example, the transmission resource may be a common channel defined or configured by a second communication node and is used by the first communication node in a non-connected state to transmit location information corresponding to the first communication node.

The target signaling may be understood as a signaling used to configure or define the location of a transmission resource. By the target signaling, the location of the transmission resource can be indicated to the first communication node. The target signaling may be a broadcast signaling defined by the second communication node.

In this embodiment, a transmission resource is determined, and then the transmission resource is transmitted to the first communication node by defining a target signaling. The location of the transmission resource can be indicated to the first communication node so that the first communication node can transmit, in a non-connected state, a data packet at least including location information based on the transmission resource. In this manner, increased power consumption caused by the first communication node repeatedly interacting with the second communication node to establish a connection for transmitting the data packet is avoided.

In an embodiment, the data packet including location information includes information related to the identity of the first communication node.

In an embodiment, the data packet including location information does not include information related to the identity of the first communication node.

In an embodiment, determining the transmission resource includes defining or configuring the transmission resource.

In this embodiment, the second communication node may define or configure a common resource as a transmission resource. The defined or configured transmission resource may be used by multiple first communication nodes to transmit, in a non-connected state, data packets at least including location information.

In an embodiment, the method also includes receiving the data packet transmitted by the first communication node and at least including the location information.

In this embodiment, the first communication node determines a transmission resource according to the target signaling transmitted by the second communication node, selects a time-frequency resource in the transmission resource, and transmits, on the time-frequency resource, the data packet at least including the location information to the second communication node. The second communication node receives the data packet at least including the location information transmitted by the first communication node.

In an embodiment, the data packet is transmitted on the transmission resource.

In an embodiment, receiving the data packet transmitted by the first communication node and at least including the location information includes receiving the data packet transmitted by the first communication node and at least including the location information and W pilots transmitted together with the data packet, where W is greater than 1.

In this embodiment, the first communication node acquires the corresponding location information, determines W pilots, and transmits the data packet at least including the location information and the W pilots to the second communication node together. The second communication node receives the data packet at least including the location information transmitted by the first communication node and the W pilots transmitted together with the data packet.

In an embodiment, the W pilots are independent and unrelated.

In an embodiment, the W pilots are determined according to information in the transmitted data packet.

In an embodiment, the W pilots are determined according to one or more bits in the transmitted data packet.

In an embodiment, each pilot is from a pilot set including M pilots, and each pilot is determined from the pilot set according to log₂(M) bits in the transmitted data packet.

In an embodiment, at least two pilots of the W pilots are from different pilot sets.

In an embodiment, at least two pilots of the W pilots have different lengths.

In an embodiment, only U symbols in each pilot of the W pilots are non-zero values, where U is greater than 0 and less than 5.

In an embodiment, the value of W is 2.

In an embodiment, receiving the data packet transmitted by the first communication node and at least including the location information includes receiving the data packet transmitted by the first communication node and at least including the location information and 1 pilot transmitted together with the data packet.

In an embodiment, the time interval for transmitting the location information is at least greater than a set threshold.

In an embodiment, the set threshold is in seconds or minutes.

In an embodiment, the method also includes the following.

Spread symbols transmitted by the first communication node are received; the spread symbols are symbols obtained by spreading a modulation symbol through a spreading sequence, and the modulation symbol is a symbol obtained by coding and modulating the data packet at least including the location information.

In this embodiment, the first communication node codes and modulates the data packet at least including location information to form a modulation symbol, that is, the modulation symbol may be understood as a symbol obtained after the data packet at least including location information is coded and modulated; each modulation symbol is spread through a spreading sequence to obtain spread symbols, that is, the spread symbols may be understood as a symbol after the modulation symbol is spread through the spreading sequence; then the spread symbols are transmitted to the second communication node. The second communication node receives the spread symbols transmitted by the first communication node.

In an embodiment, the spreading sequence is determined according to information in the transmitted data packet.

In an embodiment, the spreading sequence is from a set including V spreading sequences, and the spreading sequence is determined from the set including V spreading sequences by log₂ (V) bits in the transmitted data packet.

In an embodiment, the location information includes one or more of the following: location information of a global positioning system; location information of the BeiDou positioning system; location information of a cellular positioning system; location information of a positioning system based on a positioning tag; location information based on a wireless router positioning system; location information based on a Bluetooth positioning system; or location information based on an ultra-wideband positioning system.

The information transmission method is exemplarily described below by different embodiments.

### Embodiment one

To enable a terminal (that is, a first communication node) to transmit location information as energy-efficiently as possible and to save signaling overheads of the system, the terminal may always be in a non-connected state when no transmission task exists, that is, the terminal may always be in an RRC idle state or inactive state. In this manner, the terminal may sleep deeply and shut down all transmission-related circuits. When location information (that is, the location information of the first communication node) needs to be sent, the terminal in the non-connected state, RRC idle state, or inactive state may directly initiate the transmission of location information autonomously (that is, the terminal in the non-connected state transmits a data packet at least including location information to the second communication node) without establishing a connection with the system in advance or requesting a base station or an access node (that is, a second communication node) to allocate a resource for uplink transmission (that is, without acquiring the grant and scheduling of a resource for uplink transmission). Since the terminal completes transmission in the non-connected state, after the transmission is completed, the terminal does not need to release the connection and can immediately enter a non-connected state or an idle state (deep-sleep state) that is almost equivalent to the device being shut down. In this manner, extremely simplified transmission of location information in a non-connected state can be implemented, and spectrum efficiency of the system and power consumption of the terminal can be effectively reduced.

The terminal in the non-connected state may determine when to transmit the location information of the terminal autonomously and then directly transmit the location information without notifying the base station or system before transmission or applying for a transmission resource from the base station. This also means that the base station or the system does not need to arrange a dedicated time-frequency resource or a UE-specific time-frequency resource for transmitting the location information of each terminal, or the base station or the system does not need to arrange different time-frequency resources for transmitting the location information of each terminal. The base station or the system only needs to configure a common channel (that is, a common transmission resource). For example, the base station or the system configures such a common channel by broadcasting information and notifies all terminals to transmit their location information on this common channel. However, since the transmission of location information is initiated autonomously by a terminal, the base station cannot control or know which terminals and how many terminals are involved in each transmission. The base station can only decode the information (that is, a data packet at least including location information) transmitted by each terminal from the received signals through multi-user detection technology to acquire the location information. Further, the base station can estimate the wireless channels experienced by each user signal from the received signals (the received signals may be understood as data packets at least including location information transmitted by the terminals) so that each piece of location information and corresponding wireless channel information can be obtained.

Certainly, in the process of transmitting location information in a non-connected state, the base station may receive, on the same time-frequency resource, data packets at least including location information autonomously sent by many different terminals. The transmission of these data packets may be contention-based, so resource collisions exist. Especially in a scenario of a large number of terminals, the user load is very high, and the collision may be very serious. Separating these data packets is a great challenge for the base station.

To improve the demodulation performance of location information under high user load, the modulation symbol after the location information is coded and modulated may be transmitted using the symbol extension technology. In other words, each modulation symbol is spread to generate L symbols through a spreading sequence of L length (that is, L may represent the length of the spreading sequence). Assuming the n-th modulation symbol is sₙ and the spreading sequence of L length is [c₁, c₂, ... c_{L}], then the n-th modulation symbol becomes L symbols of (sₙ*c₁, sₙ*c₂, ... sₙ*c_{L)} after being spread by this L-length spreading sequence (that is, the data packet at least including the location information is coded and modulated to form a modulation symbol; each modulation symbol is spread by the spreading sequence to obtain spread symbols). The transmission information (that is, the transmitted data packet) has a total of N modulation symbols in the transmission if the symbol extension technology is not applied; the transmission information becomes N*L symbols when the symbol extension technology is used and the length of the spreading sequence is L. In this manner, the multi-user separation capability of the code domain can be provided. In addition, each symbol undergoes symbol extension. If the spread symbols are transmitted in the frequency domain, the modulation symbols can have better diversity effects. If transmission is a power-limited scenario and spread symbols are transmitted in the time domain, each modulation symbol may have L times of energy accumulation, and the signal-to-noise ratio may increase by L times.

In a scenario of non-connected transmission or scheduling-free transmission, reference signals may be autonomously selected by users. Therefore, different users may select the same reference signals, that is, reference signal collision occurs. However, when overload is high, that is, when many users exist, the probability of reference signal collision is very high. Once reference signals collide, it is difficult for the base station to separate two users through the reference signals. To reduce collision and pollution of reference signals and to estimate channels, timing offset, and frequency offset, the reference signals, the sequence, and the overheads need to be doubled, and the detection complexity increases quadratically. In the sparse pilot scheme, the number of pilots is significantly increased without increasing pilot resource overheads, thus significantly reducing the probability of pilot collisions. The base station extracts channel information from data symbols so that the pressure of the sparse pilots can be relieved, that is, only partial, not all information of the wireless channels is required to be estimated from the sparse pilots. On the other hand, the independent multi-pilot technology refers to the inclusion of 2 or more pilots in one transmission (that is, determining W pilots; transmitting the data packet at least including the location information and the W pilots to the second communication node together; W is greater than 1), and the pilots are unrelated or independent (that is, the W pilots are independent and unrelated). In this manner, under the same pilot overheads, the probability of W independent pilots of different users colliding at the same time is much smaller than that of a single pilot. The base station may use an iterative receiver to decode corresponding users in each round through the pilots that have not collided, then reconstruct data and pilots of the corresponding users, and eliminate the data and pilots from the received signals. This iteration is repeated until all solvable users are solved. Since the probability of simultaneous collision between independent multi-pilots is much smaller than that of a single pilot, the transmission scheme using independent multi-pilots can support high user load in the case of competitive non-connected transmission (or contention-based scheduling-free transmission). In this embodiment, the independent multi-pilot technology and the sparse pilot technology may be combined, that is, multiple independent and unrelated sparse pilots are used to further reduce the collision of user pilots and further increase the user load.

The frequency at which a terminal transmits the location information should not be too frequent, that is, the terminal preferably transmits the location information once at a relatively long time interval (that is, the time interval for transmitting the data packet is at least greater than a set threshold).

The unit of the set threshold is seconds or minutes. For example, the terminal autonomously reports one piece of location information every several minutes on average (or several seconds on average).

To prevent multiple consecutive transmissions from different terminals on the same time-frequency resource, the time interval between two transmissions of each terminal is preferably different or even random, which can be achieved by the terminal randomly determining the transmission time. The terminal autonomously determines a time-frequency resource for transmission. For example, the terminal autonomously determines the location of the time-frequency resource according to a random number generator. The structures of the random number generators of different terminals are different, or the initial seeds are different so that a certain degree of randomness can be achieved.

In an embodiment, the system defines or configures a common channel (that is, a transmission resource) for a terminal in a non-connected state/RRC idle state/inactive state to transmit location information on this channel. Then a broadcast signaling (that is, target signaling) is defined to indicate the location of the time-frequency resource where the channel is located. Actually, the base station notifies, by the broadcast signaling, the terminal of the location of the time-frequency resource for information transmission (that is, through a target signaling, the second communication node indicates the location of the transmission resource to the first communication node).

In an embodiment, a terminal in a non-connected state/RRC idle state/inactive state directly transmits the data packet at least including location information of the terminal to a base station/access point (before transmission, the connected state is not required to be entered, and it is not required to apply for a resource from the base station).

For each transmission, the terminal autonomously determines a transmission resource for transmission, that is, the terminal selects a time-frequency resource from the common transmission resource. The terminal usually autonomously determines one of the common time-frequency resources (that is, the transmission resource, including many transmission resources) defined by the system for transmitting the data packet (that is, selecting a time-frequency resource in the transmission resource; and transmitting, on the time-frequency resource, the data packet at least including the location information to the second communication node).

The terminal transmits, by the independent multi-pilot technology or the sparse pilot technology, the data packet including the location information. The transmission information (that is, data packet) contains location information. The pilots selected by the transmission information may be independent multi-pilots, sparse pilots, or independent multiple sparse pilots (that is, determining W pilots; transmitting the data packet at least including the location information and the W pilots to the second communication node together; W is greater than 1).

The frequency of transmitting location information by the terminal is very sparse. For example, transmission is performed once every tens of seconds on average, once every few minutes, or no more than 100 times per hour on average (that is, the time interval for transmitting the location information is at least greater than a set threshold, and the set threshold is in seconds or minutes).

The data packet at least including the location information is transmitted by the symbol extension technology. In other words, after the data packet at least including the location information is coded and modulated to form a modulation symbol, each modulation symbol is spread into L symbols by a spreading sequence of L length (that is, coding and modulating the data packet at least including the location information to form a modulation symbol; spreading, through a spreading sequence, the modulation symbol to obtain spread symbols; and transmitting the spread symbols to the second communication node).

The location information includes location information of the global positioning system (GPS); location information of the BeiDou positioning system; location information of a cellular positioning system; location information of a positioning system based on a positioning tag; location information based on a wireless router (Wi-Fi router) positioning system; location information based on a Bluetooth positioning system; or location information based on an ultra-wideband positioning system. The location information based on the Wi-Fi router, the location information based on the Bluetooth positioning system, and the location information based on the ultra-wideband positioning system are more conducive to acquiring the location information of the terminal in a room.

### Embodiment two

The independent multi-pilot is used as an example for explanation.

In the present application, the first communication node transmits, in a non-connected state, the data packet at least including location information. Since no central node exists to coordinately arrange the pilots used by different terminals, different terminals may choose the same pilot when autonomously selecting pilots from a preset pilot set with a limited number of pilots. This is the so-called problem of pilot collision. However, in a high-overload scenario, that is, in a scenario where many access terminals exist, the probability of pilot collision is high. Once pilots of different terminals collide, it is difficult for a base station to demodulate data packets of these terminals by pilots. Therefore, if the pilot collision is not handled well, the performance of transmitting location information in a non-connected state deteriorates seriously. If the related pilot scheme is still used to achieve the transmission of location information in a non-connected state, the probability of pilot collision is relatively high.

FIG. 4 is a diagram illustrating the implementation of transmitting a data packet based on a pilot scheme according to an embodiment. As shown in FIG. 4, one transmission may include a pilot/reference signal and a data packet; the pilot or reference signal may also be considered as a preamble or a demodulation reference signal (DMRS); the pilot may be located in front of the data packet (that is, payload/message in FIG. 4) or in the middle of the data packet. The pilot scheme has an obvious feature.

Each transmission may include only one or one type of pilot or reference signal. The one or one type may mean that the pilot is composed of a sequence or multiple related sequences.

For example, the preamble is used for illustration. Transmission may include one preamble sequence or multiple associated preamble sequences. For example, the transmission may include two preambles [P1, P2], but the two preambles are simply repeated from a preamble sequence P, that is, P1 = P2 = P. Such a preamble scheme may be used for timing offset and frequency offset estimation.

FIG. 5A is a diagram illustrating the implementation of a pilot scheme according to an embodiment. As shown in FIG. 5A, the transmission may include one pilot formed by a preamble sequence.

Alternatively, FIG. 5B is a diagram illustrating the implementation of another pilot scheme according to an embodiment. As shown in FIG. 5B, the transmission may include two preambles [P1, P2]. However, [P1, P2] is formed by weighted repetition of a preamble sequence P through an orthogonal cover code (OCC), that is, P1 = P, and P2 = P, or P1 = P, and P2 = -P.

Alternatively, the transmission may include two preambles [P1, P2]. However, [P1, P2] is composed of a preamble sequence P repeated with other weights, that is, P1 = αP, and P2 = βP, where α and β are weight values. For example, the preceding OCC weighting is a special case where [α, β] = [1, 1] or [1, -1]. Such a preamble scheme can further increase the number of preambles, but may destroy the orthogonality of the preambles.

Similarly, the DMRS is used as an example. The transmission may include one DMRS or multiple associated DMRSs.

For example, the transmission may include two DMRSs [P1, P2]. However, the two DMRSs are formed by simple repetition of a DMRS sequence, that is, P1 = P2 = P.

Alternatively, the two DMRSs are formed by repetition of a DMRS sequence by OCC weighting, that is, P1 = P2 = P, or P1 = P, and P2 = -P.

Alternatively, the two DMRSs are formed by repetition of a DMRS sequence by other weighting, that is, P1 = αP, and P2 = βP, where α and β are weighting values. For example, the two DMRSs are formed by repetition of a DMRS sequence by OCC weighting, that is, [α, β] = [1, 1] or [1, -1].

In some schemes, the preamble and DMRS are available at the same time. In this case, the preamble and DMRS may have the preceding features. In addition, the preamble and DMRS are related. Generally, when a preamble is determined, the corresponding DMRS is also determined.

However, since the pilot overheads are limited, the number of pilots (N) included in a pilot set is usually not large, for example, N = 64. Generally, one or one type of pilot/reference signal exists in the related scheme. In a scenario of the transmission in a non-connected state, if many terminals perform transmission at the same time, the probability of collision is high. For example, when N = 64, the probability of collision between any two terminal pilots is already 1/64. If many terminals perform transmission at the same time, the probability of collision is much greater than 1/64.

In a non-connected state, the data packet at least including location information of the first communication node is transmitted to the second communication node. One transmission includes two or more pilots, and the pilots are independent/unassociated/unrelated. In other words, the pilot signal of one transmission is composed of two or more independent/unassociated/unrelated pilot sequences (that is, determining W pilots; transmitting the data packet at least including the location information and the W pilots to the second communication node together; W is greater than 1; the W pilots are independent and unrelated).

FIG. 6A is a diagram illustrating the implementation of transmitting a data packet based on pilots according to an embodiment. As shown in FIG. 6A, in a non-connected state, the data packet at least including the location information of the first communication node is transmitted to the second communication node. The pilot signal for one transmission is composed of 2 independent/unassociated/unrelated pilot sequences (that is, preambles P1 and P2).

FIG. 6B is another diagram illustrating the implementation of transmitting a data packet based on pilots according to an embodiment. As shown in FIG. 6B, in a non-connected state, the data packet at least including location information of the first communication node is transmitted to the second communication node. The pilot signal for one transmission is composed of W independent/unassociated/unrelated pilot sequences (that is, preambles P1, P2, ... Pw).

Further, the data packet including location information of the first communication node transmitted together with the pilots includes information about multiple independent and unrelated pilots. For example, the data packet may include the index numbers of these pilots in a pilot set or the initial state of generated pilots. In this manner, once the data packet of a terminal is decoded successfully, the information of all the pilots used by the terminal in this transmission can be known, and then all the pilots can be reconstructed so that the interference of the pilot signals can be eliminated (that is, the W pilots are determined according to the information in the transmitted data packet).

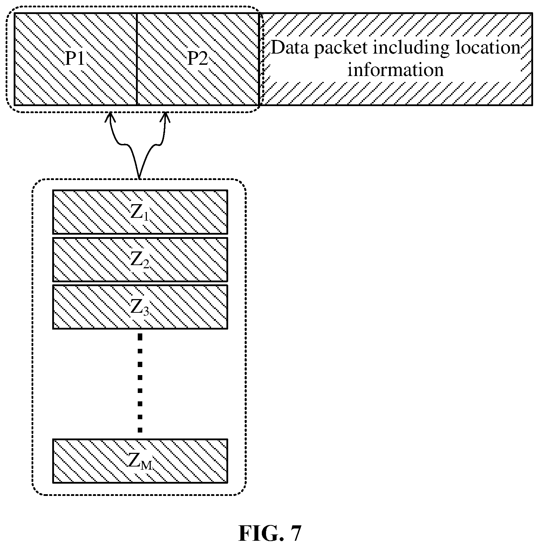

FIG. 7 is a diagram illustrating the implementation of yet another pilot scheme according to an embodiment. As shown in FIG7, P1 and P2 are both selected from a pilot set Z including M pilot sequences (that is, each pilot is from a pilot set including M pilots, and each pilot is determined from the pilot set according to log₂(M) bits in the transmitted data packet). The pilot set Z includes z₁, z₂, ... z_{M}, that is, a total of M pilot sequences.

The first communication node, such as the terminal, selects P1 and P2 from Z. P1 and P2 are independent/unassociated/unrelated. Specifically, if M = 2^m (2 to the power of m), m bits are required to determine a sequence from Z, that is, a sequence can be selected from Z using m bits as an index. Therefore, the terminal needs m bits to select P1 from Z and another m bits to select P2. The m bits required to select P1 and the m bits required to select P2 are independent and unrelated.

In an embodiment, P1 and P2 may be determined separately by two groups of bits where each group has m bits in the data packet (that is, W pilots are determined according to one or more bits in the transmitted data packet). In this manner, once the data packet of a terminal is decoded correctly, the receiver (that is, the second communication node) can know P1 and P2 used by the terminal so that the interference of the pilot signals can be eliminated.

For example, when M = 64, the terminal may determine P1 by 6 bits (that is, log₂(M) = 6) in the data packet of the terminal and determine P2 by another 6 bits in the data packet. P1 and P2 are determined according to 2m bits of the data packet. Thus, it is not necessary to add additional information indicating preamble sequences in the data packet, thereby saving overheads. Alternatively, the terminal may generate 6 bits or a value of [1, 64], that is, an integer in the range of 1 to 64, from a number of bits in the data packet according to a certain rule to determine P1; the terminal may also generate 6 bits or a value of [1, 64], that is, an integer in the range of 1 to 64, from a number of bits in the data packet according to a certain rule to determine P2. In this manner, it is also not necessary to add additional information indicating the preamble sequences in the data packet, thereby saving overhead.

Certainly, P1 and P2 may be generated by additional 2m bits, but the additional 2m bits need to be put into the data packet. As a result, the data packet has an additional 2m bits, reducing the transmission efficiency.

Alternatively, as shown in FIG. 7, the system defines a sequence generation method for generating M preamble sequences. M preamble sequences are generated by a Zadoff-Chu sequence (ZC sequence) generation formula. Specifically, M preamble sequences are generated by setting the two variables of the "root" value and the "cyclic shift" value in the ZC sequence formula.

The "cyclic shift" of generating P1 is independent of the "cyclic shift" of generating P2.

Alternatively, the "root" and "cyclic shift" of generating P1 are independent of the "root" and "cyclic shift" of generating P2.

Alternatively, as shown in FIG. 7, the system defines a sequence generation method for generating N preamble sequences by a shift register sequence generator. Specifically, the N sequences are generated by setting different "initial states" of the shift register sequence generator. Then the "initial states" of P1 and P2 may be independent and unrelated.

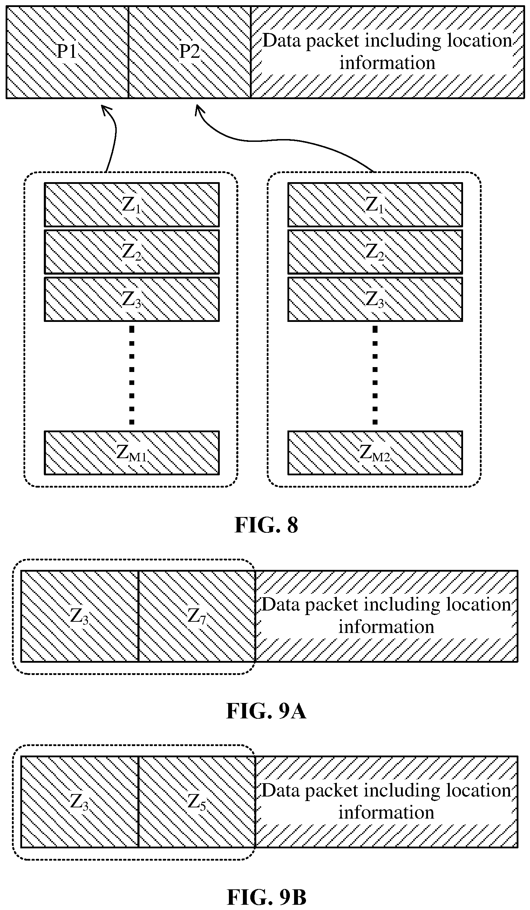

FIG. 8 is a diagram illustrating the implementation of yet another pilot scheme according to an embodiment. As shown in FIG. 8, the system defines a sequence generation method for generating M1 preamble sequences and another sequence generation method for generating M2 preamble sequences; the pilot set/pilot pool including M1 pilot sequences is set to Z1, and Z1 includes z₁, z₂, ... z_{M1}, with a total of M1 preamble sequences; the pilot set/pilot pool including M2 pilot sequences is set to Z2, and Z2 includes z₁, z₂, ... z_{M2}, with a total of M2 preamble sequences. P1 and P2 are generated by these two sequence generation methods respectively, but the generation of P1 and P2 is independent and unrelated (that is, at least 2 pilots of the W pilots are from different pilot sets).

For example, the system defines a sequence generation method for generating M1 preamble sequences by a ZC sequence formula (that is, formula1), and the system defines a sequence generation method for generating M2 preamble sequences by another ZC sequence formula (that is, formula2). Specifically, different sequences are generated by setting two different variables of "root" and "cyclic shift" in the ZC sequence formula.

Therefore, the "cyclic shifts" of P1 and P2 may be independent and unrelated.

Alternatively, the "root" and "cyclic shift" of P1 and P2 are independent and unrelated.

For another example, the system defines a sequence generation method for generating M1 preamble sequences by using a shift register sequence generator 1, and the system defines a sequence generation method for generating M2 preamble sequences by a shift register sequence generator 2. Specifically, different sequences are generated by setting different "initial states" of the shift register sequence generators.

Then the "initial states" of P1 and P2 may be independent and unrelated.

For another example, the system defines a sequence set 1 including M1 preamble sequences and a sequence set 2 including M2 preamble sequences. P1 is selected from sequence set 1. P2 is selected from sequence set 2. The index value 1 for selecting P1 from sequence set 1 and the index value 2 for selecting P2 from sequence set 2 are independent and unrelated.

The length of the pilots in sequence set 1 including M1 preamble sequences and the length of the pilots in sequence set 2 including M2 preamble sequences may be the same or different (at least 2 pilots of the W pilots have different lengths).

In an embodiment, in a non-connected state, the data packet at least including location information of the first communication node is transmitted to the second communication node.

One transmission includes W pilots, and the W pilots are independent/unassociated/unrelated. Here, the W pilots may be one of the following: W preamble sequences transmitted in a physical random-access channel (PRACH) defined by the long-term evolution (LTE) standard; W PRACH preamble sequences defined by the New Radio (NR) standard; W DMRS sequences defined by the LTE standard; W DMRS sequences defined by the NR standard; W maximum length shift register (MLSR) sequences; W discrete Fourier transform DFT) sequences; or W Walsh-Hadamard sequences.

W unrelatedly/independently generated sequences are used as preambles, and the possibility of simultaneous collision is small. FIG. 9A is a diagram illustrating the implementation of yet another pilot scheme according to an embodiment. As shown in FIG. 9A, W = 2. Two pilot sequences selected by terminal 1 are z₃ and z₇. FIG. 9B is a diagram illustrating the implementation of yet another pilot scheme according to an embodiment. As shown in FIG. 9B, W = 2. Two pilot sequences selected by terminal 2 are z₃ and z₅. It can be seen that the first preamble sequences P1 of terminal 1 and terminal 2 both select z₃, that is, two P1 collide, but the second preamble sequences P2, namely, z₇ and z₅, are different.

The receiver may perform channel estimation using the second non-colliding preamble sequences to demodulate the data packets of terminal 1 and terminal 2.

The independent multi-pilot technology means that two or more pilots are included in one transmission, and the pilots are independent, unrelated, and unassociated. In this manner, under the same pilot overheads, the probability of simultaneous collision of independent multi-pilots of different terminals is much smaller than that of a single pilot. However, the base station may use an iterative receiver to decode data packets of corresponding terminals in each round through non-colliding pilots, then reconstruct data and pilots of the corresponding terminals, and eliminate the data and pilots from the received signals. This iteration is repeated until all the decodable data packets of the terminals are decoded. Since the probability of simultaneous collision between independent multi-pilots is much smaller than that of a single pilot, the transmission scheme using independent multi-pilots can support high user load in the case of non-connected transmission.

### Embodiment three

The sparse pilot is used as an example for description.

To reduce pilot collisions, as many pilots as possible may be defined, that is, the number of pilots in a pilot set should be as large as possible. Increasing the number of pilots means that the overheads of pilot occupation also need to increase. In another aspect, it is also necessary to estimate channels, timing offset, and frequency offset based on the pilots to complete the relevant demodulation of data symbols. Therefore, each reference signal needs to occupy sufficient resources, and reference signals need to be throughout the entire transmission bandwidth and time. In other words, each reference signal cannot be too sparse in the entire transmission bandwidth and time, and a specific density is required so that the wireless multi-path channel (that is, the frequency-selective channel) in the entire transmission bandwidth and the frequency offset in the transmission time can be estimated. Therefore, to ensure the transmission performance in a non-connected state and still use the relevant pilot scheme, the overheads occupied by pilots increase exponentially, and the detection complexity also increases significantly.

A demodulation reference signal (DMRS) set is defined, including 12 reference signals. A demodulation reference signal may also be referred to as a demodulation reference signal port (DMRS port), that is, a set of 12 DMRS ports is defined.

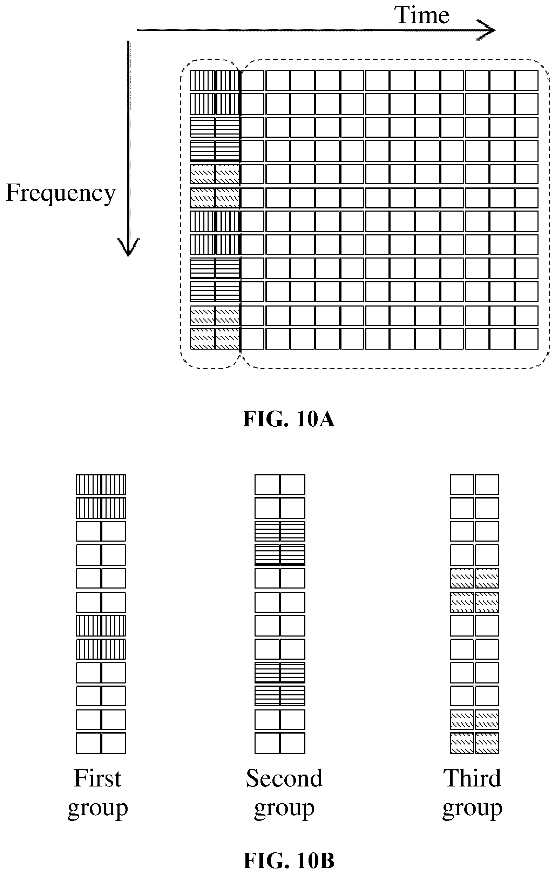

FIG. 10A is a diagram illustrating the implementation of defining a physical resource block according to an embodiment. As shown in FIG. 10A, a defined physical resource block (PRB) includes 14 orthogonal frequency-division multiplexing (OFDM) (or Discrete Fourier Transform-Spread-Orthogonal Frequency-Division Multiplexing (DFT-S-OFDM) or single-carrier frequency-division multiple access (SC-FDMA)) symbols in the time domain and 12 subcarriers in the frequency domain. Each small grid is a subcarrier of an OFDM symbol and is also commonly referred to as a resource element (RE). That is, one PRB shown in FIG. 10A includes (12*14 = 168) resource elements in total. This type of DMRS uses the first two OFDM symbols to carry the demodulation reference signal, that is, the first two OFDM symbols are used as a DMRS area. In other words, resource overheads occupied by the DMRS are 1/7. The area other than the DMRS area is a data symbol area.

FIG. 10B is a diagram illustrating the implementation of defining demodulation reference signals according to an embodiment. As shown in FIG. 10B, demodulation reference signals (DMRSs) may be divided into three groups according to the position of the occupied resource units (REs); the non-zero symbols (non-zero signals or useful signals) (that is, the symbols are non-zero values) of the first group of the DMRSs are carried on the REs of the pattern shown in FIG. 10A, and the first group of 4 DMRS ports are distinguished by OCC codes; the non-zero symbols of the second group of the DMRSs are carried on the REs of the pattern shown in FIG. 10A, and the second group of 4 DMRS ports are distinguished by OCC codes; the non-zero symbols of the third group of the DMRSs are carried on the REs of the pattern shown in FIG. 10A, and the third group of 4 DMRS ports are distinguished by OCC codes. Each demodulation reference signal takes a value of 0 on the RE of the blank unfilled pattern as shown in FIG. 10B, or no signal exists. It can be seen that for each demodulation reference signal, not all REs in the demodulation reference signal area have signals. However, for a terminal, as long as the terminal uses a certain reference signal/ a certain reference signal port, the terminal usually cannot use these REs to transmit data although the reference signal port has no signal on some REs in the DMRS area. From this perspective, the resource overheads occupied by a reference signal/a reference signal port are also 1/7.

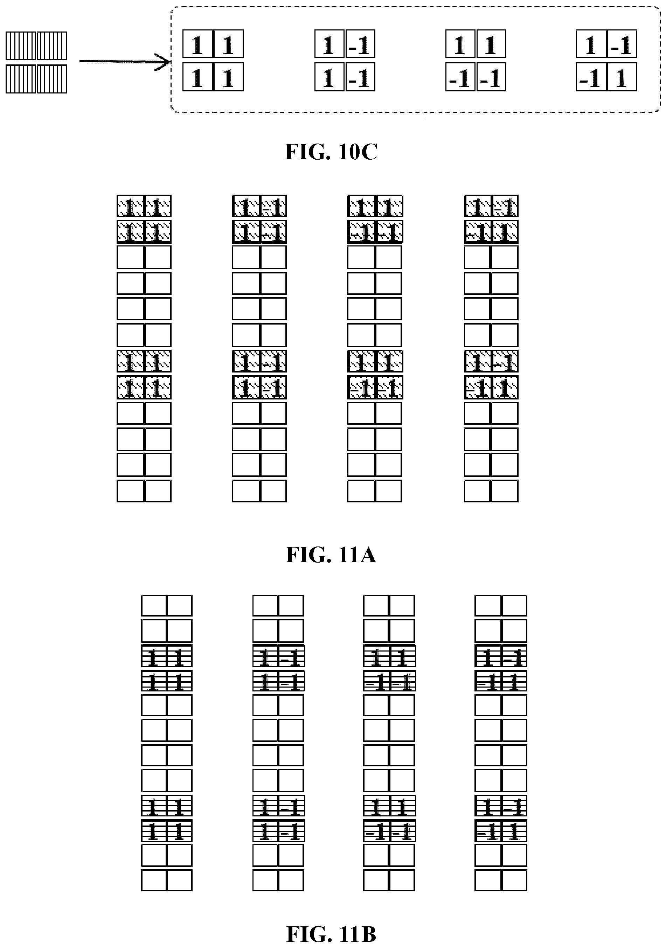

Non-zero symbols of each group of demodulation reference signals are carried on the same resource element (RE), and different reference signals can only be distinguished by non-zero symbols of different values. Generally, different reference signal ports can be distinguished by the time domain OCC code and the frequency domain OCC code. FIG. 10C is another diagram illustrating the implementation of defining demodulation reference signals according to an embodiment. As shown in FIG. 10C, four demodulation reference signals in the first group in FIG. 10B are used as an example. Four demodulation reference signal ports are separated by jointly using long-two (that is, the length is 2) OCC codes of [1, 1] and [1, -1] in the time domain and long-two (that is, the length is 2) OCC codes of [1, 1] and [1, -1] in the frequency domain. That is, in each group of DMRS ports, different DMRS ports are generated by carrying different OCC codes on patterned REs. The situation of the four reference signals in the second and third groups in FIG. 10B is similar. In this manner, a total of 12 demodulation reference signals of the defined demodulation reference signal (DMRS) set, that is, 12 demodulation reference signal ports, can be obtained.

FIG. 11A is a diagram illustrating the implementation of defining demodulation reference signals using an OCC according to an embodiment. As shown in FIG. 11A, for four demodulation reference signals in the first group in FIG. 10B, four demodulation reference signal ports are separated by jointly using long-two OCC codes of [1, 1] and [1, -1] in the time domain and long-two OCC codes of [1, 1] and [1, -1] in the frequency domain.

FIG. 11B is another diagram illustrating the implementation of defining demodulation reference signals using an OCC according to an embodiment. As shown in FIG. 11B, for four demodulation reference signals in the second group in FIG. 10B, four demodulation reference signal ports are separated by jointly using long-two OCC codes of [1, 1] and [1, -1] in the time domain and long-two OCC codes of [1, 1] and [1, -1] in the frequency domain.

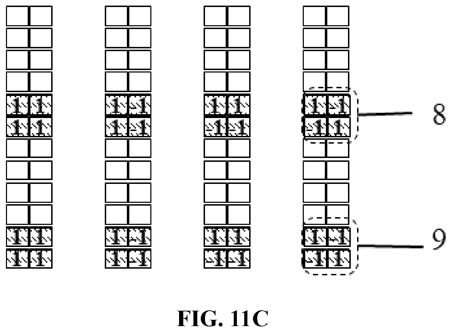

FIG. 11C is yet another diagram illustrating the implementation of defining demodulation reference signals using an OCC according to an embodiment. As shown in FIG. 11C, 8 represents a first reference signal unit, and 9 represents a second reference signal unit; for four demodulation reference signals in the third group in FIG. 10B, four demodulation reference signal ports are separated by jointly using long-two OCC codes of [1, 1] and [1, -1] in the time domain and long-two OCC codes of [1, 1] and [1, -1] in the frequency domain.

In the present application, a reference signal carried on several adjacent resource elements (REs) in the time domain and frequency domains may be referred to as a reference signal element (RSE). For example, in FIGS. 10A to 10C and 11A to 11C, a reference signal carried on four consecutive REs in the time and frequency domains are referred to as an RSE. Figuratively speaking, the reference signal on the "grid" filled with a pattern is an RSE. From the perspective of the channel estimation function, in addition to the characteristic of being composed of adjacent resource elements in the time and frequency domains, an RSE has another characteristic, that is, when applying a reference signal for channel estimation, each RSE may estimate a channel value.

According to this definition, for the DMRS set defined as shown in FIG. 10A, FIG. 10B, FIG. 10C, FIG. 11A, FIG. 11B, and FIG. 11C, each reference signal has 2 RSEs within 1 PRB bandwidth, so the channel value at 2 points within a PRB bandwidth (that is, within a bandwidth of 12 subcarriers) can be estimated. The channel values of 12 subcarriers within a PRB bandwidth need to be obtained by interpolation of estimation values of these reference signal units.

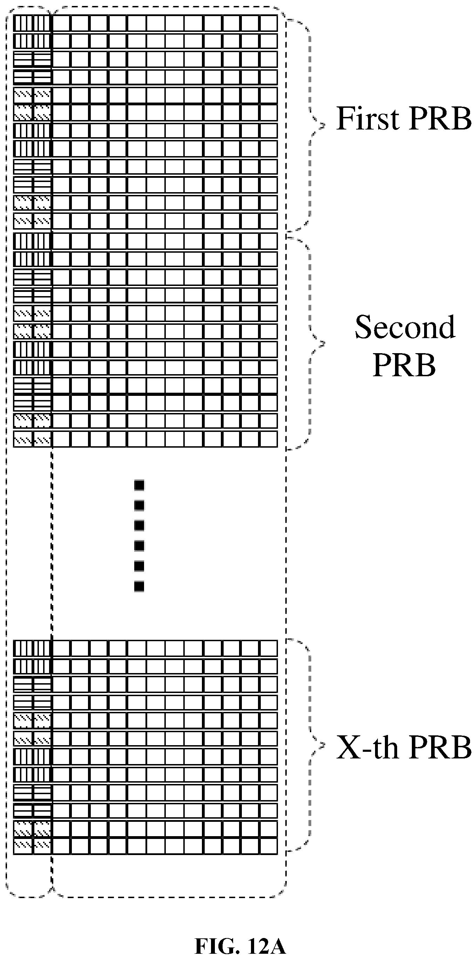

FIG. 12A is a diagram illustrating the implementation of transmission based on a PRB according to an embodiment. As shown in FIG. 12A, if one transmission includes X PRBs, the 12 demodulation reference signals (or 12 demodulation reference signal ports) of this reference signal set are shown in FIG. 12A, and each reference signal has 2*X RSEs. Thus, the channel values at 2*X equally spaced locations within the entire transmission bandwidth can be estimated, and then the channel values of all 12*X subcarriers within the transmission bandwidth are obtained by interpolation.

The 12 DMRSs can be divided into three groups according to the occupied positions of REs.

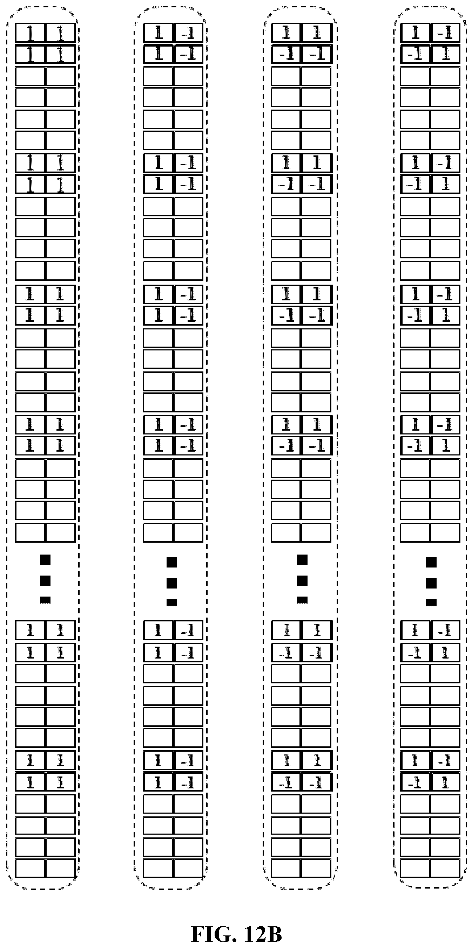

FIG. 12B is yet another diagram illustrating the implementation of defining demodulation reference signals according to an embodiment. As shown in FIG. 12B, the four demodulation reference signals of the first group are distinguished by the OCC code.

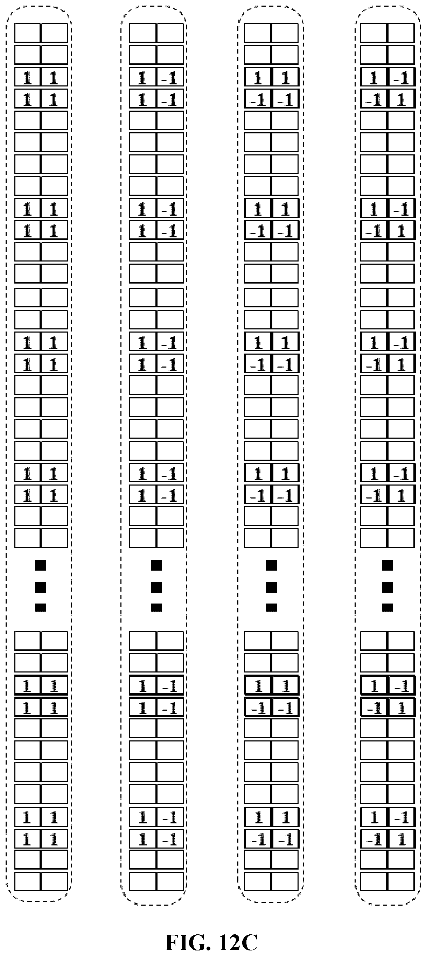

FIG. 12C is yet another diagram illustrating the implementation of defining demodulation reference signals according to an embodiment. As shown in FIG. 12C, the four demodulation reference signals of the second group are distinguished by the OCC code.

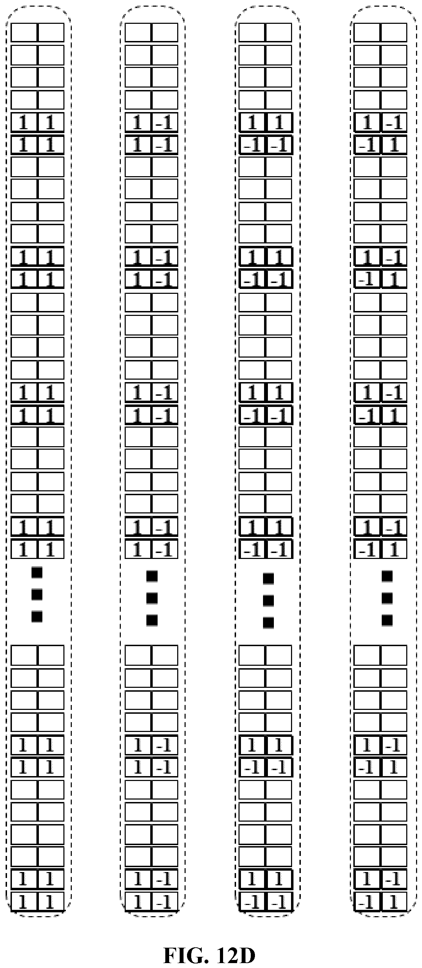

FIG. 12D is yet another diagram illustrating the implementation of defining demodulation reference signals according to an embodiment. As shown in FIG. 12D, the four demodulation reference signals of the third group are distinguished by the OCC code.

It can be learned that to estimate the channel of the entire transmission bandwidth of each access terminal, the demodulation reference signal (or pilot) occupies a relatively large amount of resources, or the demodulation reference signal needs a certain density in the entire transmission bandwidth and cannot be too sparse. In FIGS. 10A to 10C, 11A to 11C, and 12A to12D, it can be said that the density of this demodulation reference signal in the entire transmission bandwidth is 2 reference signals per PRB or 2 reference signal units (RSE) per PRB.

For the system, the overheads of the reference signals are 1/7, that is, 1/7 resources paid by the system can only design 12 demodulation reference signals. For data transmission in a non-connected transmission state, the collision probability of any two terminals autonomously selecting reference signals is 1/12, which is still very high. Therefore, the demodulation reference signal severely limits the number of terminals transmitting data in the non-connected transmission state.

If the reference signal also needs to estimate a certain frequency offset, the resources occupied by each reference signal need to be further increased, or the density of each reference signal in the transmission signal needs to be further encrypted. For example, repetition is performed once in the timing domain to estimate the frequency offset. In this manner, the resources occupied by the reference signal double, that is, the overheads are 2/7. That is, the system pays 2/7 of the resources and can only design 12 demodulation reference signals to estimate the frequency-selective channel and frequency offset. If the system further needs to cope with a certain timing offset, the resources occupied by the reference signal need to be further increased. For example, 3/7 or even 4/7 of the overheads are required to design 12 demodulation reference signals. With such large overheads, only a small number of reference signal sets (or a small number of reference signal ports) can be obtained, and the probability of collision in the non-connected state is very high.

If a multi-path channel changes more quickly in the frequency domain, that is, the characteristic of frequency selection is more obvious, the density of the demodulation reference signal on the frequency domain needs to be increased to ensure precision of channel estimation, that is, a demodulation reference signal has a higher density on the frequency domain. Each demodulation reference signal has three reference signal units (for example, 3 grids exists in a figurative sense) in each PRB bandwidth. In this manner, each PRB may have 3 estimated values, X PRBs have 3*X estimated values, and then the channels of all subcarriers of X PRBs are obtained by linear interpolation. This reference signal still accounts for 1/7 overheads of the transmission resource, but only 8 demodulation reference signals (8 demodulation reference signal ports) can be separated, less than that of the definition above. It can be seen that the channel estimation capability is usually inversely proportional to the number of reference signals.

Therefore, the root of the problem faced by the application of reference signals in a scenario of non-connected transmission is that the tasks or responsibilities of reference signals are too heavy. That is, reference signals are needed to estimate the frequency selection channel, timing offset, and frequency offset of the entire transmission channel and are also needed to identify terminal users, so reference signals need to occupy more time-frequency resources to complete such heavy tasks. This leads to a serious shortage of reference signals under certain resources. The number of terminals supporting transmission in a non-connected state is limited by the number of reference signals.

The main starting point of the present application is to greatly reduce the tasks of reference signals, so the resources occupied by each reference signal can be minimized, or each reference signal can be the sparsest. Thus, the number of reference signals can be maximized, and finally, both pre-configured scheduling-free and contention-based scheduling-free can support more terminals.

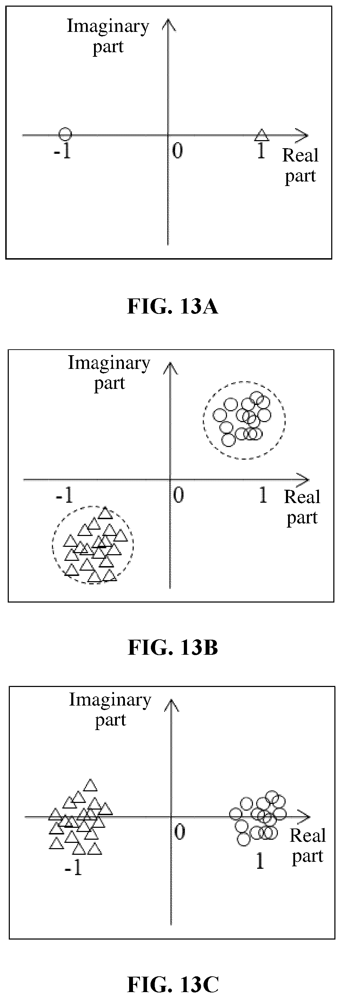

Specifically, the present application estimates the channel of the entire transmission bandwidth, timing offset, and frequency offset by the data-based channel estimation technology (rather than based on the reference signal) and the characteristics of the data, such as geometric characteristics of the constellation diagrams of data symbols. That is, it is no longer necessary to estimate the channel of the entire transmission bandwidth, timing offset, and frequency offset by the reference signal. Channel estimation is used as an example. To simplify description, a block flat fading channel is used as an example. FIG. 13A is a diagram of a BPSK symbol according to an embodiment. As shown in FIG. 13A, the constellation diagram of a binary phase shift keying (BPSK) symbol transmitted by the terminal may be considered as a standard BPSK constellation diagram. FIG. 13B is another diagram of a BPSK symbol according to an embodiment. FIG. 13C is yet another diagram of a BPSK symbol according to an embodiment. As shown in FIG. 13B, after passing through the wireless channel and the wireless receiver and reaching the base station side, the BPSK symbol is no longer the standard BPSK constellation diagram shown in FIG13A but is imposed a weighting coefficient by the wireless channel, that is, a rotation plus a scaling change and the receiver's additive white Gaussian noise (AWGN) results in symbol scatter points. FIG. 13B shows the scatter points corresponding to the symbols after channel weighting. The channel weighting can be estimated using the geometric shape of the symbol scatter points.

It can be learned that the constellation diagram of a low-order modulation signal such as BPSK after rotation and scaling (that is, channel weighting) still has strong geometric characteristics, so channel estimation and equalization can use the geometric characteristics of this constellation diagram to estimate the rotation amount and scaling amount, and then the constellation diagram can be reversely rotated back so that the equalization is completed. That is, the symbol scatter points after signal equalization are obtained, as shown in FIG. 13C. Specifically, as shown in FIG. 13B, the scatter points corresponding to the symbol received by the base station can still be seen as two groups of separated scatter points. The base station only needs to add up the circular scatter points and the triangular scatter points separately to obtain two scatter point centers. Then the base station rotates the scatter point center corresponding to the triangular scatter points by 180° and adds up the scatter point center corresponding to the circular scatter points to obtain the channel weighting expressed in complex form on the final BPSK symbol and also obtain the rotation amount and scaling amount. The angle of the complex number is the rotation amount, and the modulus of the complex number is the scaling amount.

Therefore, in the solution of the present application, the task of the reference signal is much smaller than that of the related scheme, so each reference signal occupies much fewer resources than that of the related solution. Thus, under certain overheads, the number of reference signals in the present application is much more than that of the related solution.

On the other hand, when the base station has multiple receiving antennas, such as R receiving antennas, the base station can theoretically provide a very powerful spatial capability to improve the performance of multi-terminal access. To acquire this spatial capability, the present application proposes that "extremely sparse" reference signals may be used to estimate the spatial channels that hk = [hₖ₁, hₖ₂, ... h_{kR}]^{t} experienced by each terminal signal, where t denotes the transposition operator. These estimated spatial channels are then used to perform spatial merging of the received signals. Specifically, the spatial merging of the signal of terminal k is as follows: sₖ = hₖ'*y, where that y = [yₖ₁, yₖ₂, ... y_{kR}]^{t} is the received signal of R receiving antennas, and hₖ' is the conjugate transpose of hₖ. The receiver then uses the spatially merged data symbol sₖ to estimate the channel of the entire transmission bandwidth experienced by the signal of terminal k and to estimate the timing offset and frequency offset. Then, the spatially merged data symbol sₖ is compensated for the timing offset and frequency offset. Finally, the data symbol compensated for the timing offset and frequency offset is demodulated and decoded.

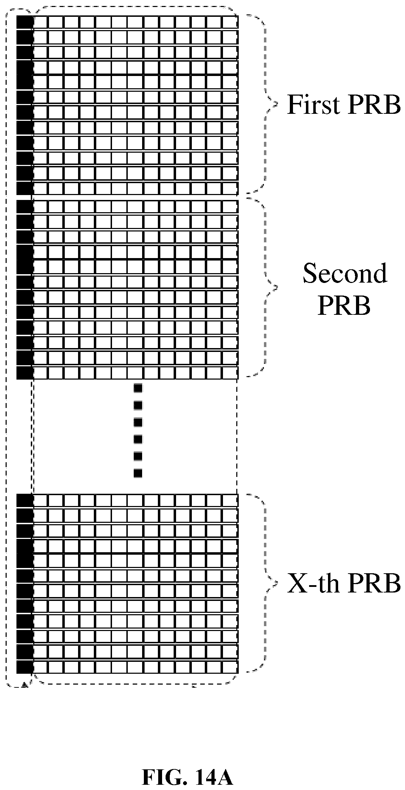

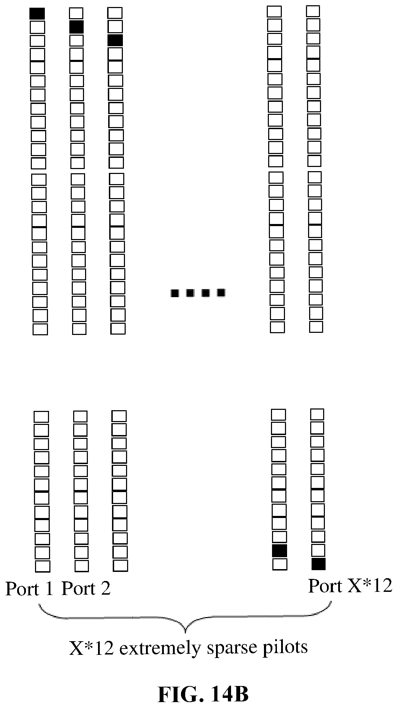

Therefore, the present application does not use the reference signal to estimate the channel within the entire transmission bandwidth, nor does the present application use the reference signal to estimate the timing offset and frequency offset. FIG. 14A is a diagram illustrating the implementation of defining a reference signal according to an embodiment. As shown in FIG. 14A, the reference signal proposed by the present application occupies one OFDM symbol. One transmission includes X PRB time-frequency resources. One physical resource block (PRB) includes 14 OFDM (DFT-S-OFDM or SC-FDMA) symbols in the time domain and 12 subcarriers in the frequency domain. The first OFDM symbol is used to carry a demodulation reference signal, that is, the first OFDM symbol is used as the extremely sparse pilot area, and 1/14 of the resources are used to transmit the reference signal. That is, 12*X REs are used to transmit the reference signal. The area other than the extremely sparse pilot area is the data symbol area. FIG. 14B is another diagram illustrating the implementation of defining a reference signal according to an embodiment. As shown in FIG. 14B, each reference signal defined by the system has a non-zero symbol (a non-zero signal or a useful signal) on only one RE, and no signal exists in other places (or the value of other places is 0). In this manner, the reference signal area occupying 1/14 of the overheads can be divided into 12*X reference signals in total. Specifically, six PRBs with 1/14 overheads can be divided into (6*12 = 72) reference signals, which is far greater than 8 or 12 reference signals in the NR system (these reference signals still account for 1/7 overheads of the transmission resource).

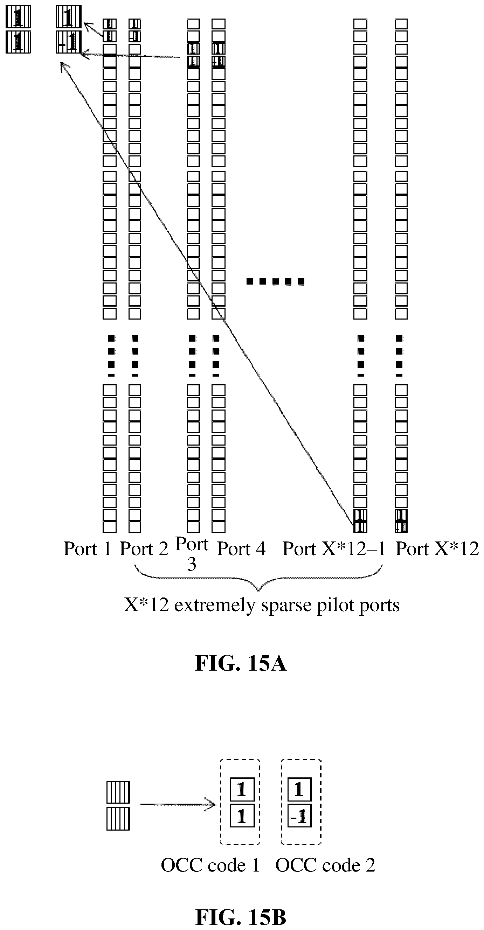

FIG. 15A is yet another diagram illustrating the implementation of defining a reference signal according to an embodiment. As shown in FIG. 15A, each reference signal defined by the system has non-zero symbols (non-zero signals or useful signals) only on 2 REs. Every 2 REs are divided into 2 reference signals through a length-two OCC, and no signal exists in other places (or the value of other places is 0). In this manner, the reference signal area occupying 1/14 of the overheads can also be divided into 12*X reference signals in total. Specifically, six PRBs with 1/14 overheads can be divided into (6*12 = 72) reference signals, which is far greater than 8 or 12 reference signals in the NR system. The number of extremely sparse pilots is proportional to the number of PRBs.

FIG. 15B is a diagram illustrating the implementation of generating DMRS ports according to an embodiment. As shown in FIG. 15B, different OCC codes (such as OCC code 1 and OCC code 2) are carried on two patterned REs to generate different DMRS ports.

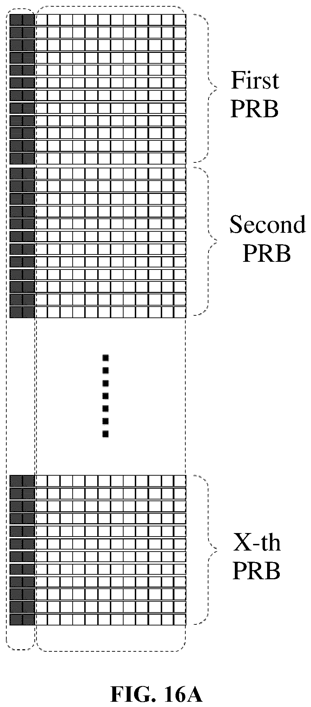

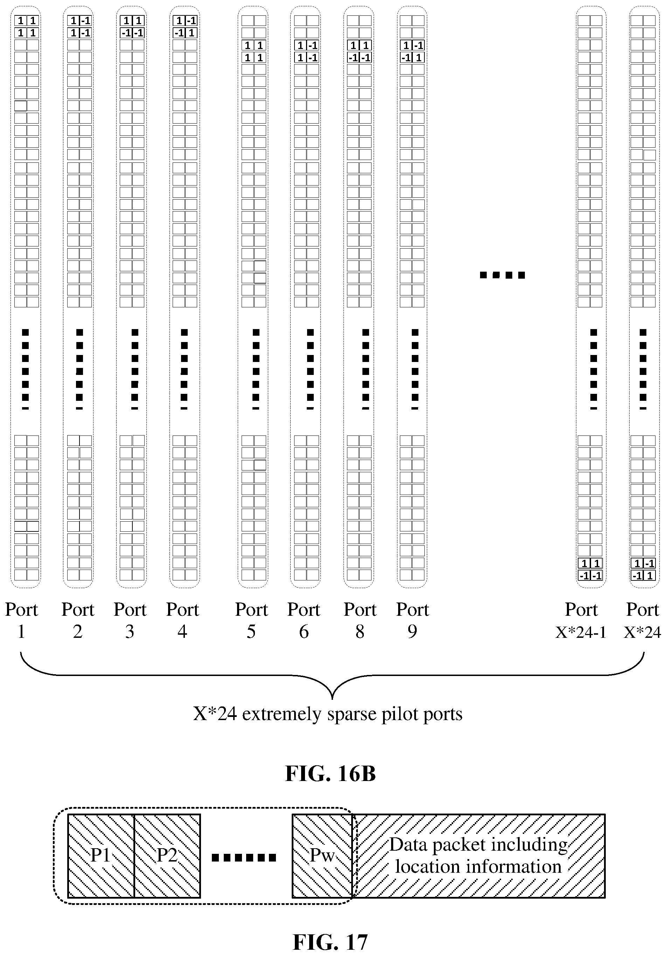

FIG. 16A is yet another diagram illustrating the implementation of defining a reference signal according to an embodiment. As shown in FIG. 16A, the reference signal defined by the system occupies 2 OFDM symbols. FIG. 16B is yet another diagram illustrating the implementation of defining a reference signal according to an embodiment. As shown in FIG. 16B, each reference signal defined by the system has non-zero symbols (non-zero signals or useful signals) only on a group of adjacent 4 REs, but 4 reference signals exist and reuse a group of adjacent 4 REs. The four reference signals reusing the same group of four adjacent REs are distinguished by OCC codes. In this manner, in the transmission of X PRBs, the reference signal area that accounts for 1/7 of the overheads can be divided into a total of 24*X reference signals. Specifically, six PRBs with 1/7 overheads can be divided into (6*24 = 144) reference signals, which is far greater than 8 or 12 reference signals in the NR system. It also shows that the number of extremely sparse pilots is proportional to the number of PRBs.

The numerical values shown in the embodiment of the present application are only exemplary descriptions and are not specifically limited. The values may be adjusted adaptively according to actual situations. It can be learned that sparse pilots actually indicate that each pilot in a pilot set has very few non-zero elements. For example, only 1-4 non-zero elements exist. This can significantly increase the number of pilots without increasing overheads of pilot resources, thus significantly reducing the probability of pilot collisions. The base station estimates part of the information about the wireless channel from the sparse pilots, but does not need to estimate all the information about the wireless channel from the sparse pilots. The base station further extracts channel information from the data symbols and then uses this channel information to complete the equalization of the data symbols.

It should be noted that the pilots are only used for spatial merging, but not for channel equalization, and the pilots can be considered as spatial merging reference signals.

Although the extremely sparse reference signals shown in FIG. 14A, FIG. 14B, FIG. 15A, and FIG. 15B are all located 1 or 2 symbols in front of the transmission resource, the present application does not limit the location of the extremely sparse reference signals. For example, the location of the extremely sparse reference signals may also be located in the middle symbol of the transmission resource.

In this embodiment, the preceding independent multi-pilot technology and extremely sparse pilot technology may be combined to further reduce collisions of terminal pilots and further improve the terminal load.

FIG. 17 is a diagram illustrating the implementation of an information transmission method according to an embodiment. As shown in FIG. 17, transmission of the data packet including location information includes W extremely sparse reference signals, and the data packet includes information about the W extremely sparse reference signals, such as the index numbers of the W extremely sparse reference signals. Thus, once the data packet of a terminal is successfully decoded, the information of all the extremely pilots used by the terminal in this transmission can be known, and the interference of the pilot signals can be eliminated.

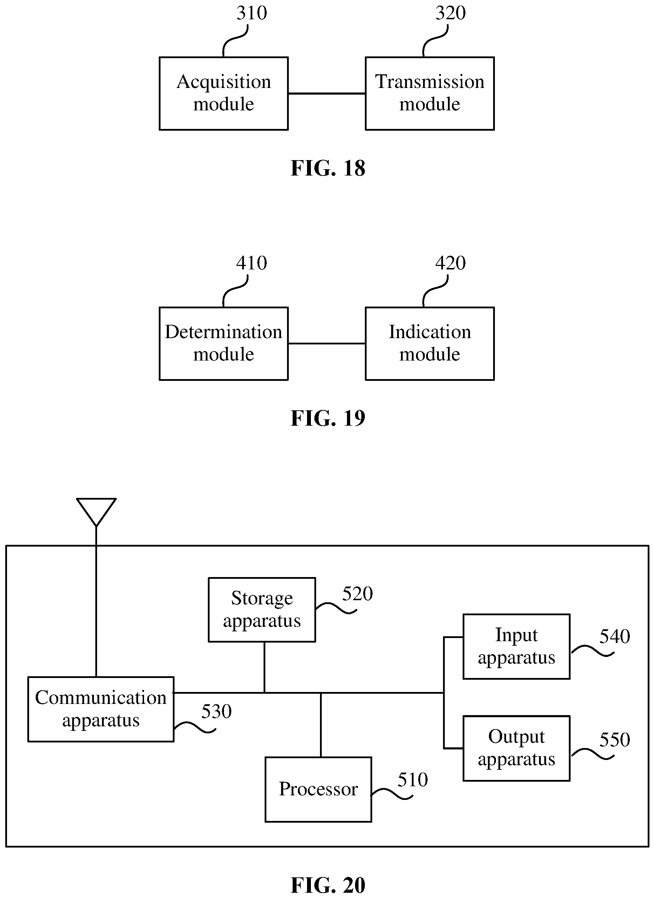

This embodiment also provides an information transmission apparatus. FIG. 18 is a diagram illustrating the structure of an information transmission apparatus according to an embodiment. As shown in FIG. 18, the information transmission apparatus may be configured in a first communication node and includes an acquisition module 310 and a transmission module 320.

The acquisition module 310 is configured to acquire location information of the first communication node.

The transmission module 320 is configured to transmit, in a non-connected state, a data packet at least including the location information to a second communication node.

In the transmission apparatus of this embodiment, the acquired location information of the first communication node is transmitted to the corresponding second communication node in the non-connected state so that the increase in power consumption caused by repeated interaction in establishing a connection with the second communication node can be avoided.

In an embodiment, the apparatus also includes a signaling acquisition module and a resource determination module.

The signaling acquisition module is configured to acquire a target signaling.

The resource determination module is configured to determine, based on the target signaling, a transmission resource configured or defined by the second communication node, where the transmission resource is used by the first communication node in a non-connected state to transmit the data packet at least including location information.

In an embodiment, the transmission module 320 includes a selection unit and a transmission unit.

The selection unit is configured to select a time-frequency resource in the transmission resource.

The transmission unit is configured to transmit the data packet at least including the location information to the second communication node on the time-frequency resource.

In an embodiment, the transmission module 320 includes a first determination unit and a first transmission unit.

The first determination unit is configured to determine W pilots.

The first transmission unit is configured to transmit the data packet at least including the location information and the W pilots to the second communication node together; where W is greater than 1.

In an embodiment, the W pilots are independent and unrelated.

In an embodiment, the W pilots are determined according to information in the transmitted data packet.

In an embodiment, the W pilots are determined according to one or more bits in the transmitted data packet.

In an embodiment, each pilot is from a pilot set including M pilots, and each pilot is determined from the pilot set according to log₂(M) bits in the transmitted data packet.

In an embodiment, at least two pilots of the W pilots are from different pilot sets.

In an embodiment, at least two pilots of the W pilots have different lengths.

In an embodiment, only U symbols in each pilot of the W pilots are non-zero values, where U is greater than 0 and less than 5.

In an embodiment, the value of W is 2.

In an embodiment, the transmission module 320 includes a second determination unit and a second transmission unit.

The second determination unit is configured to determine a pilot, where only U symbols in the pilot are non-zero values, and U is greater than 0 and less than 5.

The second transmission unit is configured to transmit the data packet at least including the location information and the 1 pilot to the second communication node together.

In an embodiment, the time interval for transmitting the data packet is at least greater than a set threshold.

In an embodiment, the set threshold is in seconds or minutes.

In an embodiment, the transmission module 320 includes a modulation unit and a third transmission unit.

The modulation unit is configured to spread, through a spreading sequence, a modulation symbol formed by coding and modulating the data packet at least including location information to obtain spread symbols.

The third transmission unit is configured to transmit the spread symbols to the second communication node.

In an embodiment, the spreading sequence is determined according to information in the transmitted data packet.

In an embodiment, the spreading sequence is from a set including V spreading sequences, and the spreading sequence is determined from the set including V spreading sequences by log₂ (V) bits in the transmitted data packet.

In an embodiment, the location information includes one or more of the following: location information of a global positioning system; location information of the BeiDou positioning system; location information of a cellular positioning system; location information of a positioning system based on a positioning tag; location information based on a wireless router positioning system; location information based on a Bluetooth positioning system; or location information based on an ultra-wideband positioning system.

In an embodiment, the data packet including location information includes information related to the identity of the first communication node.

In an embodiment, the data packet including location information does not include information related to the identity of the first communication node.

The information transmission apparatus provided in this embodiment and the information transmission method provided in the preceding embodiments belong to the same inventive concept. For technical details not described in detail in this embodiment, reference may be made to any one of the preceding embodiments. The embodiment has the same beneficial effects as the applied information transmission method.

This embodiment also provides an information transmission apparatus. FIG. 19 is a diagram illustrating the structure of an information transmission apparatus according to an embodiment. As shown in FIG. 19, the information transmission apparatus may be configured in a second communication node and includes a determination module 410 and an indication module 420.

The determination module 410 is configured to determine a transmission resource.

The indication module 420 is configured to indicate, through a target signaling, the location of the transmission resource to a first communication node, where the transmission resource is used by the first communication node in a non-connected state to transmit a data packet at least including location information.

In the information transmission apparatus provided in this embodiment, a transmission resource is determined, and then the transmission resource is transmitted to the first communication node by defining a target signaling. The location of the transmission resource can be indicated to the first communication node so that the first communication node can transmit, in a non-connected state, a data packet at least including location information based on the transmission resource. In this manner, increased power consumption caused by the first communication node repeatedly interacting with the second communication node to establish a connection for transmitting the data packet is avoided.

In an embodiment, the determination module 410 includes a definition unit.

The definition unit is configured to define or configure the transmission resource.

In an embodiment, the apparatus also includes a receiving module.

The receiving module is configured to receive the data packet transmitted by the first communication node and at least including the location information.

In an embodiment, the data packet is transmitted on the transmission resource.

In an embodiment, the receiving module includes a first receiving unit.

The first receiving unit is configured to receive the data packet transmitted by the first communication node and at least including the location information and W pilots transmitted together with the data packet, where W is greater than 1.

In an embodiment, the W pilots are independent and unrelated.

In an embodiment, the W pilots are determined according to information in the transmitted data packet.

In an embodiment, the W pilots are determined according to one or more bits in the transmitted data packet.

In an embodiment, each pilot is from a pilot set including M pilots, and each pilot is determined from the pilot set according to log₂(M) bits in the transmitted data packet.

In an embodiment, at least two pilots of the W pilots are from different pilot sets.

In an embodiment, at least two pilots of the W pilots have different lengths.

In an embodiment, only U symbols in each pilot of the W pilots are non-zero values, where U is greater than 0 and less than 5.

In an embodiment, the value of W is 2.

In an embodiment, the time interval for transmitting the data packet is at least greater than a set threshold.

In an embodiment, the set threshold is in seconds or minutes.

In an embodiment, the apparatus also includes a second receiving unit.

The second receiving unit is configured to receive spread symbols transmitted by the first communication node; the spread symbols are symbols obtained by spreading a modulation symbol through a spreading sequence, and the modulation symbol is a symbol obtained by coding and modulating the data packet at least including the location information.

In an embodiment, the spreading sequence is determined according to information in the transmitted data packet.

In an embodiment, the spreading sequence is from a set including V spreading sequences, and the spreading sequence is determined from the set including V spreading sequences by log₂ (V) bits in the transmitted data packet.

In an embodiment, the location information includes one or more of the following: location information of a global positioning system; location information of the BeiDou positioning system; location information of a cellular positioning system; location information of a positioning system based on a positioning tag; location information based on a wireless router; location information based on a Bluetooth positioning system; or location information based on an ultra-wideband positioning system.

In an embodiment, the receiving module includes a third receiving unit.

The third receiving unit is configured to receive the data packet transmitted by the first communication node and at least including the location information and 1 pilot transmitted together with the data packet.

In an embodiment, the data packet including location information includes information related to the identity of the first communication node.

In an embodiment, the data packet including location information does not include information related to the identity of the first communication node.

The information transmission apparatus provided in this embodiment and the information transmission method provided in the preceding embodiments belong to the same inventive concept. For technical details not described in detail in this embodiment, reference may be made to any one of the preceding embodiments. The embodiment has the same beneficial effects as the applied information transmission method.

An embodiment of the present application also provides a communication node. The communication node includes a first communication node and a second communication node. FIG. 20 is a diagram illustrating the structure of hardware of a communication node according to an embodiment. As shown in FIG. 20, the communication node provided by this application includes a storage apparatus 520, a processor 510, and a computer program stored on the storage apparatus and runnable on the processor. The processor 510, when executing the program, implements the preceding information transmission method.

The communication node may also include the storage apparatus 520. One or more processors 510 may be provided in the communication node, and one processor 510 is used as an example in FIG. 20. The storage apparatus 520 is configured to store one or more programs that, when executed by the one or more processors 510, cause the one or more processors 510 to implement the information transmission method in embodiments of the present application.

The communication node also includes a communication apparatus 530, an input apparatus 540, and an output apparatus 550.

The one or more processors 510, the storage apparatus 520, the communication apparatus 530, the input apparatus 540, and the output apparatus 550 in the communication node may be connected via a bus or other means, with connection via the bus as an example in FIG. 20.

The input apparatus 540 may be configured to receive input digital or character information and generate key signal input related to user settings and function control of the communication node. The output apparatus 550 may include a display device, for example, a display screen.

The communication apparatus 530 may include a receiver and a sender. The communication apparatus 530 is configured to perform information transceiving and communication under the control of the one or more processors 510.

As a computer-readable storage medium, the storage apparatus 520 may be configured to store software programs, computer-executable programs, and modules, such as program instructions/modules (for example, the acquisition module 310 and the transmission module 320 in the information transmission apparatus; or the determination module 410 and the indication module 420 in the information transmission apparatus) corresponding to the information transmission method according to embodiments of the present application. The storage apparatus 520 may include a program storage region and a data storage region, where the program storage region may store an operating system and an application program required by at least one function while the data storage region may store data created depending on use of the communication node. Additionally, the storage apparatus 520 may include a high-speed random-access memory and may also include a non-volatile memory, such as at least one magnetic disk memory, a flash memory, or another non-volatile solid-state memory. In some examples, the storage apparatus 520 may also include memories which are remotely disposed with respect to the processor 510. These remote memories may be connected to the communication node via a network. Examples of the preceding network include but are not limited to, the Internet, an intranet, a local area network, a mobile communication network, and a combination thereof.

An embodiment of the present application provides a storage medium. The storage medium stores a computer program that, when executed by a processor, causes the processor to perform the information transmission method according to any embodiment of the present application.

Optionally, the information transmission method is applied to a first communication node and includes the following: location information of the first communication node is acquired. In a non-connected state, a data packet at least including the location information is transmitted to a second communication node.

Optionally, the information transmission method is applied to a second communication node and includes the following: a transmission resource is determined. Through a target signaling, the location of the transmission resource is indicated to a first communication node, where the transmission resource is used by the first communication node in a non-connected state to transmit a data packet at least including location information.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The above are only example embodiments of the present application and not intended to limit the scope of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), and an optical memory apparatus and system (a digital video disc (DVD) or a compact disk (CD)). Computer-readable medium may include a non-transitory storage medium. The data processor may be of any type suitable for a local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. An information transmission method, applied to a first communication node, comprising:
acquiring location information of the first communication node; and
in response to the first communication node being in a non-connected state, transmitting a data packet comprising the location information to a second communication node.

2. The information transmission method of claim 1, further comprising:
acquiring a target signaling;
determining, based on the target signaling, a transmission resource configured or defined by the second communication node, wherein the transmission resource is used by the first communication node in the non-connected state to transmit the data packet.

3. The information transmission method of claim 2, wherein transmitting the data packet comprising the location information to the second communication node comprises:
selecting a time-frequency resource in the transmission resource; and
transmitting the data packet to the second communication node on the time-frequency resource.

4. The information transmission method of claim 1, wherein transmitting the data packet comprising the location information to the second communication node comprises:
determining W pilots; and
transmitting both the data packet and the W pilots to the second communication node; wherein W is greater than 1.

5. The information transmission method of claim 4, wherein the W pilots are independent and unrelated.

6. The information transmission method of claim 4, wherein the W pilots are determined according to information in the data packet.

7. The information transmission method of claim 6, wherein the W pilots are determined according to one or more bits in the data packet.

8. The information transmission method of claim 6, wherein each of the W pilots is from a pilot set comprising M pilots, and each of the W pilots is determined from the pilot set according to log₂(M) bits in the data packet.

9. The information transmission method of claim 4, wherein at least two pilots of the W pilots are from different pilot sets.

10. The information transmission method of claim 4, wherein at least two pilots of the W pilots have different lengths.

11. The information transmission method of claim 4, wherein only U symbols in each of the W pilots are non-zero values, wherein U is greater than 0 and less than 5.

12. The information transmission method of claim 4, wherein a value of W is 2.

13. The information transmission method of claim 1, wherein transmitting the data packet comprising the location information to the second communication node comprises:
determining a pilot, wherein only U symbols in the pilot are non-zero values, and U is greater than 0 and less than 5; and
transmitting both the data packet and the pilot to the second communication node.

14. The information transmission method of claim 1, wherein a time interval for transmitting the data packet is greater than a set threshold.

15. The information transmission method of claim 14, wherein the set threshold is in seconds or minutes.

16. The information transmission method of claim 1, wherein transmitting the data packet comprising the location information to the second communication node comprises:
spreading, through a spreading sequence, a modulation symbol formed by coding and modulating the data packet to obtain spread symbols; and
transmitting the spread symbols to the second communication node.

17. The information transmission method of claim 16, wherein the spreading sequence is determined according to information in the data packet.

18. The information transmission method of claim 16, wherein the spreading sequence is from a set comprising V spreading sequences, and the spreading sequence is determined from the set comprising V spreading sequences by log₂(V) bits in the data packet.

19. The information transmission method of any one of claims 1 to 18, wherein the location information comprises one or more of the following:
location information of a global positioning system; location information of a BeiDou positioning system; location information of a cellular positioning system; location information of a positioning system based on a positioning tag; location information based on a wireless router positioning system; location information based on a Bluetooth positioning system; or location information based on an ultra-wideband positioning system.

20. The information transmission method of claim 1, wherein the data packet comprises information related to an identity of the first communication node.

21. The information transmission method of claim 1, wherein the data packet does not comprise information related to an identity of the first communication node.

22. An information transmission method, applied to a second communication node, comprising:
determining a transmission resource; and
indicating, through a target signaling, a location of the transmission resource to a first communication node, wherein the transmission resource is used by the first communication node in a non-connected state to transmit a data packet comprising location information.

23. The information transmission method of claim 22, wherein determining the transmission resource comprises:
defining or configuring the transmission resource.

24. The information transmission method of claim 22, further comprising:
receiving the data packet transmitted by the first communication node.

25. The information transmission method of claim 24, wherein the data packet is transmitted on the transmission resource.

26. The information transmission method of claim 24, wherein the data packet transmitted by the first communication node comprises at least location information of the first communication node, and receiving the data packet transmitted by the first communication node comprises:
receiving the data packet transmitted by the first communication node and W pilots transmitted together with the data packet transmitted by the first communication node, wherein W is greater than 1.

27. The information transmission method of claim 24, wherein a time interval for transmitting the data packet is greater than a set threshold.

28. The information transmission method of claim 27, wherein the set threshold is in seconds or minutes.

29. The information transmission method of claim 22, further comprising:
receiving spread symbols transmitted by the first communication node, wherein the spread symbols are symbols obtained by spreading a modulation symbol through a spreading sequence, and the modulation symbol is a symbol obtained by coding and modulating the data packet.

30. The information transmission method of claim 29, wherein the spreading sequence is determined according to information in the data packet.

31. The information transmission method of claim 24 or 29, wherein the location information comprises one or more of the following:
location information of a global positioning system; location information of a BeiDou positioning system; location information of a cellular positioning system; location information of a positioning system based on a positioning tag; location information based on a wireless router positioning system; location information based on a Bluetooth positioning system; or location information based on an ultra-wideband positioning system.

32. A communication node, comprising:
one or more processors; and
a storage apparatus configured to store one or more programs;
wherein the one or more programs, when executed by the one or more processors, cause the one or more processors to perform the information transmission method of any one of claims 1 to 31.

33. A storage medium with a computer program stored therein, wherein the computer program, when executed by a processor, causes the processor to perform the information transmission method of any one of claims 1 to 31.
